# EUROPEAN PATENT APPLICATION

(11) **EP 2 596 842 A2**
(43) Date of publication of application: **29.05.2013**
(21) Application number: 12190769.5
(22) Date of filing: 31.10.2012
(51) Int. Cl.: A63F 13/12

(54) **Communication system, communication program, information processing apparatus, server, and communication method**

(30) Priority: 25.11.2011 JP 2011257520
(71) Applicant: Nintendo Co., Ltd., Kyoto, 601-8501 (JP)
(72) Inventor: Takemoto, Kenichi, Kyoto 601-8501 (JP); Nakano, Keigo, Kyoto 601-8501 (JP); Niwa, Kazutomo, Kyoto 601-8501 (JP)
(74) Representative: Lang, Johannes

(57) **Abstract**

Reporting means reports, to a server, an evaluation regarding an execution of a predetermined application performed by each of other information processing apparatuses. Matchmaking means, when a plurality of information processing apparatuses execute the application together, sets a combination of the information processing apparatuses on the basis of at least the evaluation. Processing execution means executes the application together with any of the other information processing apparatuses with which the information processing apparatus has been combined by the matchmaking means.

## Description

### BACKGROUND OF THE INVENTION

### Field Of The Invention

The present invention relates to a communication system, a communication program, an information processing apparatus, a server, and a communication method, and in particular, relates to a communication system, a communication program, an information processing apparatus, a server, and a communication method that, for example, control the process of combining communication partners together.

### Description of the Background Art

Conventionally, a game system is known where a user performs a communication game such as a versus game with another user via a network. In such a game system, it is possible to perform a communication game even with an unknown user, and therefore, a proposal is made for a countermeasure to prevent some user who commits dishonesty from causing a good user to feel unpleasant in the communication game (see Patent Literature 1, for example). For example, in a game system disclosed in Patent Literature 1, on the basis of information about an item owned by each user in a communication game, it is determined whether or not dishonesty has been committed in the communication game. Then, users having committed dishonesty are combined together to play in the communication game, so that users likely to commit dishonesty are not combined with other good users in the communication game.
[Patent Literature 1] Japanese Unexamined Patent Application Publication No. 2006-296769

In the game system disclosed in Patent Literature 1, however, to determine whether or not dishonesty has been committed, it is necessary to verify the item information of all the users participating in the communication game. This increases the processing load of a server and the workload of a server operator.

### SUMMARY OF THE INVENTION

Therefore, it is a main object of the present invention to provide a novel communication system, a novel communication program, a novel information processing apparatus, a novel server, and a novel communication method. Further, it is another object of the present invention to provide a communication system, a communication program, an information processing apparatus, a server, and a communication method that are capable of reducing the processing load of a server and the worldoad of a server operator while appropriately combining communication partners together.

To achieve the above object, the present invention can employ, for example, the following configurations. It should be noted that it is understood that, to interpret the descriptions of the claims, the scope of the claims should be interpreted only by the descriptions of the claims. If there is a conflict between the descriptions of the claims and the descriptions of the specification, the descriptions of the claims take precedence.

An exemplary configuration of a communication system according to the present invention is a communication system including a server and a plurality of information processing apparatuses capable of communicating with the server. Each information processing apparatus includes reporting means. The reporting means reports, to the server, an evaluation regarding an execution of a predetermined application performed by each of the other information processing apparatuses. The server includes matchmaking means. The matchmaking means, when the plurality of information processing apparatuses execute the application together, sets a combination of the information processing apparatuses on the basis of at least the evaluation. Each information processing apparatus includes processing execution means. The processing execution means executes the application together with any of the other information processing apparatuses with which the information processing apparatus has been combined by the matchmaking means.

On the basis of the above, the combination of information processing apparatuses to execute an application is set on the basis of an evaluation, reported by each of the information processing apparatuses, of each of the other information processing apparatuses. This makes it possible to reduce the processing load of a server and the worldoad of a server operator while appropriately setting the combination of information processing apparatuses (the combination of users).

In addition, the reporting means may report the evaluation of any of the other information processing apparatuses with which the information processing apparatus has been combined when executing the application.

On the basis of the above, the evaluation is made of the information processing apparatuses of other users with which a user has been combined and with which the user has executed the application. This makes it possible to obtain an appropriate evaluation from an information processing apparatus of a report source.

In addition, after the application is executed, the reporting means may report the evaluation regarding the execution of the application performed by any of the other information processing apparatuses with which the information processing apparatus has been combined when executing the application.

On the basis of the above, after the application is executed, the evaluation of the execution of the application is reported. This makes it possible to obtain an appropriate evaluation from an information processing apparatus of the report source.

In addition, the matchmaking means may combine together any of the information processing apparatuses having satisfied a predetermined condition for the evaluation.

On the basis of the above, matchmaking is performed on any of the information processing apparatuses whose evaluations made by the other information processing apparatuses have satisfied a predetermined condition. This makes it possible to appropriately set the combination of information processing apparatuses.

In addition, the matchmaking means may include classification means. The classification means, on the basis of a report score calculated using at least the evaluation made by the information processing apparatus, classifies the plurality of information processing apparatuses into at least two groups in accordance with a magnitude of the report score. In this case, the matchmaking means may combine together any of the information processing apparatuses belonging to the same group.

On the basis of the above, if the information processing apparatuses are classified into two or more groups on the basis of the evaluation, matchmaking is performed on any of the information processing apparatuses whose evaluated levels belong to the same group. This makes it possible to appropriately set the combination of information processing apparatuses.

In addition, the matchmaking means may include classification means. The classification means, on the basis of a report score calculated using at least the evaluation made by the information processing apparatus, classifies the plurality of information processing apparatuses into at least three groups in accordance with a magnitude of the report score. In this case, the matchmaking means may combine together any of the information processing apparatuses belonging to the same group, or may combine any of the information processing apparatuses belonging to a first group of the three groups, with any of the information processing apparatuses belonging to another one of the three groups except for at least yet another one of the three groups to which any of the information processing apparatuses whose calculated report scores are the most different from the magnitude of the report score classified into the first group belong.

On the basis of the above, if the information processing apparatuses are classified into three or more groups on the basis of the evaluation, matchmaking is performed on any of the information processing apparatuses whose evaluated levels are relatively close to each other. This makes it possible to appropriately set the combination of information processing apparatuses.

In addition, the server may further include report score calculation means. The report score calculation means, with respect to each evaluation made by the information processing apparatus, accumulates a report score of corresponding one of the information processing apparatuses of which the evaluation has been made. In this case, the matchmaking means may combine together any of the information processing apparatuses of which the accumulated report scores are equal to or greater than a predetermined value, or may combine together any of the information processing apparatuses of which the accumulated report scores are less than the predetermined value.

On the basis of the above, the accumulation of the evaluation made by more users makes it possible to increase the credibility of the evaluation, which makes it possible to perform more appropriate matchmaking. Further, a report score is calculated on the basis of the evaluation, which makes it possible to appropriately manage the evaluation of an information processing apparatus.

In addition, the report score calculation means may include evaluation content setting means. The evaluation content setting means sets at least evaluation contents for accumulating the report score using a positive value. In this case, when reporting the evaluation to the server, the reporting means may send to the server also information indicating one selected from among the evaluation contents in the report. The report score calculation means may accumulate the report score of the information processing apparatus of which the evaluation has been made, using the positive value corresponding to the evaluation content sent in the report.

On the basis of the above, an evaluation content for performing addition on the report score is set. This facilitates the process of accumulating the report score in accordance with the evaluation.

In addition, the evaluation content setting means may further set evaluation contents for accumulating the report score using a negative value or a value of zero. The report score calculation means may accumulate the report score of the information processing apparatus of which the evaluation has been made, using the positive value, the negative value, or the value of zero corresponding to each of the evaluation contents sent in the report.

On the basis of the above, an evaluation content for performing subtraction on the report score or for not changing the report score is also set. This enables an information processing apparatus to make a report on the basis of which an evaluation is increased or decreased, or make a report on the basis of which an evaluation is not changed.

In addition, the information processing apparatus may further include reason-for-reporting selection means. The reason-for-reporting selection means, when reporting the evaluation to the server, presents to a user of the information processing apparatus any of the evaluation contents set to the negative value or the value of zero by the evaluation content setting means, in addition to any of the evaluation contents set to the positive value by the evaluation content setting means, so as to prompt the user to select one of the evaluation contents in the report. In this case, when reporting the evaluation to the server, the reporting means may send information indicating the evaluation content selected in the report to the server.

On the basis of the above, when a user reports the evaluation using an information processing apparatus, it is possible to select not only a report on the basis of which the evaluation of an evaluatee is decreased, but also a report on the basis of which the evaluation is increased or a report on the basis of which the evaluation is not changed. This makes it possible to prevent a decrease in the evaluation of an evaluatee on the basis of a false accusation, or prevent harassment against an unintended evaluatee, as compared to the case where it is only possible to make a report on the basis of which the evaluation is decreased.

In addition, the report score calculation means may include initialization means. The initialization means, if the report score has not been subjected to addition for a predetermined period, initializes the report score to an initial value.

On the basis of the above, if a predetermined period of actual time has elapsed without performing addition on the report score, the report score is initialized. Thus, a user having received a poor evaluation may reform themselves, and thereby can return to being treated in a similar manner to other good users. This makes it possible to perform matchmaking that tolerates a user having stopped committing a dishonest act or the like. Further, even if a user sells another user an information processing apparatus of which the report score has been accumulated, the elapse of a predetermined period results in initializing the report score. This makes it possible to prevent the report score of the previous user from being taken over to the next user.

In addition, the report score calculation means may include initialization means. The initialization means, if, while the application has been executed a predetermined number of times, the report score of any of the information processing apparatuses having executed the application has not been subjected to addition, initializes the report score to an initial value.

On the basis of the above, if the application is executed a predetermined number of times without performing addition on the report score, the report score is initialized. Thus, a user having received a poor evaluation may reform themselves and execute the application, and thereby can return to being treated in a similar manner to other good users. This makes it possible to perform matchmaking that tolerates a user having stopped committing a dishonest act or the like.

In addition, the report score calculation means may include initialization means. The initialization means, if, while the application has been executed for a predetermined accumulated time, the report score of any of the information processing apparatuses having executed the application has not been subjected to addition, initializes the report score to an initial value.

On the basis of the above, if the application is executed for a predetermined accumulated time without performing addition on the report score, the report score is initialized. Thus, a user having received a poor evaluation may reform themselves and execute the application, and thereby can return to being treated in a similar manner to other good users. This makes it possible to perform matchmaking that tolerates a user having stopped committing a dishonest act or the like.

In addition, the matchmaking means may include waiting room setting means. The waiting room setting means sets at least one waiting room for waiting for the combination to be set, and provides the waiting room with a flag that distinguishes whether or not the report score of each of the information processing apparatuses waiting in the waiting room is equal to or greater than the predetermined value. In this case, when combining any of the information processing apparatuses that is not waiting in any of the at least one waiting room with any of the other information processing apparatuses, the matchmaking means may combine any of the information processing apparatuses of which the report score is set to a value equal to or greater than the predetermined value, with any of the other information processing apparatuses waiting in any of the at least one waiting room of which the flag indicates a value equal to or greater than the predetermined value, and may combine any of the information processing apparatuses of which the report score is set to a value less than the predetermined value, with any of the other information processing apparatuses waiting in any of the at least one waiting room of which the flag indicates a value less than the predetermined value.

On the basis of the above, it is possible to perform appropriate matchmaking by a simple process.

In addition, the communication system may further include log confirmation means and log confirmation result reporting means. The log confirmation means confirms a log of the execution of the application. The log confirmation result reporting means confirms, in the log, a presence or absence of dishonesty in the execution of the application, and report the confirmation result to the server. In this case, on the basis of the evaluation and the report from the log confirmation result reporting means, the matchmaking means may set the combination of the information processing apparatuses when executing the application.

On the basis of the above, it is possible to prevent a poor evaluation based on a false accusation, or remove a user who has actually committed a dishonest act.

In addition, the communication system further includes log confirmation means and log confirmation result reporting means. The log confirmation means confirms a log of the execution of the application. The log confirmation result reporting means, if dishonesty in the execution of the application has been confirmed in the log, reports to the server any of the information processing apparatuses having committed the dishonesty. In this case, in accordance with the report from the log confirmation result reporting means, the report score calculation means may accumulate the report score of the information processing apparatus regarding which the report has been made, using a relatively large positive value.

On the basis of the above, it is possible to add a relatively large number to the report score of a user who has actually committed a dishonest act.

In addition, the communication system may further include log confirmation means and log confirmation result reporting means. The log confirmation means confirms a log of the execution of the application. The log confirmation result reporting means, if dishonesty in the execution of the application has not been confirmed in the log, reports to the server any of the information processing apparatuses not having committed dishonesty. In this case, in accordance with the report from the log confirmation result reporting means, the report score calculation means may initialize the report score of the information processing apparatus regarding which the report has been made, to an initial value.

On the basis of the above, it is possible to prevent a poor evaluation based on a false accusation.

In addition, the server may further include evaluation invalidation means. The evaluation invalidation means, if the same combination of any of the information processing apparatuses having made the evaluation and corresponding one of the other information processing apparatuses of which the evaluation has been made has made the evaluation more than a predetermined number of times, determines that the evaluation made the predetermined number of times or less is valid, and the evaluation made more than the predetermined number of times is invalid. In this case, on the basis of the evaluation that is valid as a result of the determination of the evaluation invalidation means, the matchmaking means may set the combination of the information processing apparatuses when executing the application.

On the basis of the above, a report repeatedly made regarding the same user may be invalidated, which makes it possible to increase the credibility of the evaluation. Further, it is also possible to prevent a report from being repeatedly made in order to harass a particular user.

In addition, the evaluation invalidation means may determine that the evaluation made more than the predetermined number of times within a predetermined period is invalid.

On the basis of the above, a report repeatedly made regarding the same user within a predetermined period may be invalidated, which makes it possible to increase the credibility of the evaluation. Further, it is also possible to prevent a report from being repeatedly made in order to harass a particular user.

In addition, each information processing apparatus may further include report limitation means. The report limitation means limits the number of times the evaluation of the same information processing apparatus is reported, to a predetermined number of times.

On the basis of the above, a report regarding the same user may be limited, which makes it possible to increase the credibility of the evaluation. Further, it is also possible to prevent a report from being repeatedly made in order to harass a particular user.

In addition, the present invention may be carried out in the forms of a communication program that causes a computer to function as the above means, an information processing apparatus including some of the above means, a server including some of the above means, and a communication method including the operations performed by the above means.

On the basis of the present invention, the combination of information processing apparatuses to execute an application is set on the basis of an evaluation, reported by each of the information processing apparatuses, of each of the other information processing apparatuses. This makes it possible to reduce the processing load of a server and the workload of a server operator while appropriately setting the combination of information processing apparatuses.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is an external view of an example of a communication system 1 according to an embodiment of the present invention;
FIG. 2 is a block diagram showing an example of the configuration of a game apparatus 3 of FIG. 1;
FIG. 3 is a block diagram showing an example of the configuration of a matchmaking server 200 of FIG. 1;
FIG. 4 is a chronological diagram showing an example of the interactions between apparatuses when a user reports report information regarding a communication game in the communication system 1;
FIG. 5 is a chronological diagram showing an example of the interactions between apparatuses when a log of the communication game is transmitted in the communication system 1;
FIG. 6 is a diagram showing examples of main data and programs stored in a main memory 32 of the game apparatus 3;
FIG. 7 is a diagram showing examples of main data and programs stored in a storage section 203 of the matchmaking server 200;
FIG. 8 is a diagram showing an example of report score table data Dm stored in the storage section 203;
FIG. 9 is a diagram showing an example of reported log information data Dn stored in the storage section 203;
FIG. 10 is a diagram showing an example of report score information data Do stored in the storage section 203;
FIG. 11 is a flow chart showing an example of the processing executed by the game apparatus 3;
FIG. 12 is a subroutine flow chart showing an example of a game participation process in step 44 of FIG. 11;
FIG. 13 is a subroutine flow chart showing an example of a reporting process in step 52 of FIG. 11;
FIG. 14 is a flow chart showing an example of the processing executed by the matchmaking server 200;
FIG. 15 is a subroutine flow chart showing an example of a waiting list transmission process in step 92 of FIG. 14;
FIG. 16 is a subroutine flow chart showing an example of a waiting room creation process in step 94 of FIG. 14;
FIG. 17 is a subroutine flow chart showing an example of a waiting room participation process in step 96 of FIG. 14; and
FIG. 18 is a subroutine flow chart showing an example of a report score calculation process in step 98 of FIG. 14.

### DETAILED DESCRIPTION OF THE PREFERRED EMBODIMENTS

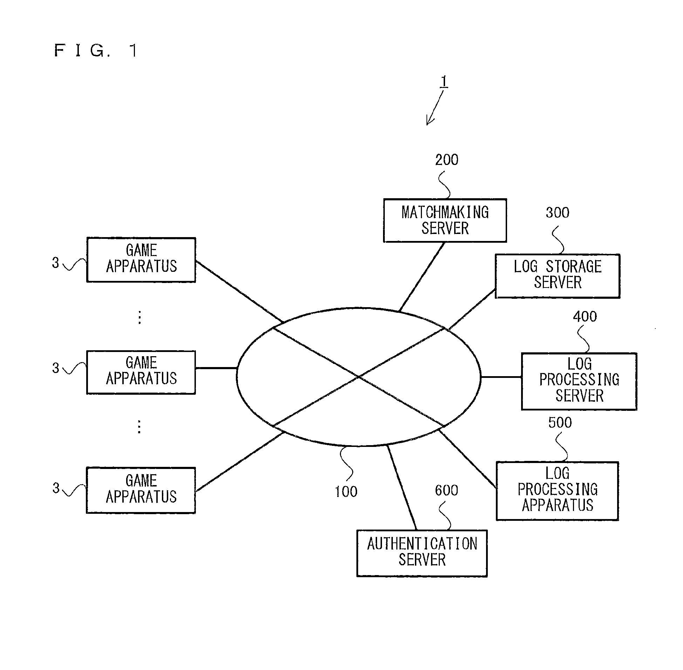

With reference to FIG. 1, a communication system according to an embodiment of the present invention is described. As shown in FIG. 1, a communication system 1, which is an example of the communication system, is constructed by the connection between a plurality of game apparatuses 3, a matchmaking server 200, a log storage server 300, a log processing server 400, a log processing apparatus 500, and an authentication server 600 via a network 100.

Each game apparatus 3 is configured to be connected to the network 100 using wireless or wired communication. For example, the game apparatus 3 can execute a predetermined application (for example, a communication game) in combination with the other game apparatuses 3, using a peer-to-peer communication method, a client-server method, or the like. Further, the game apparatus 3 can communicate with the matchmaking server 200 and the log storage server 300 by establishing connection with the matchmaking server 200 and the log storage server 300, respectively, via the network 100. For example, the game apparatus 3 can execute a program (for example, a game program), which is an example of a communication program stored in a storage medium such as an exchangeable memory card or an exchangeable optical disk, or received from a server or another game apparatus. The game apparatus 3 may be a handheld game apparatus, or may be a device such as a general personal computer, a mobile phone, or a PDA (Personal Digital Assistant). Further, the game apparatus 3 may be a stationary game system including: an optical disk having stored therein the program; a game apparatus body having a computer for executing the program stored in the optical disk to output a game screen to a monitor for display; and a controller for giving operation information to the game apparatus body, the operation information being necessary for operating an object or the like displayed on a display screen.

After the plurality of game apparatuses 3 perform predetermined processing (for example, a communication game) by communicating with each other, the log storage server 300 receives and stores a log of the processing transmitted from each game apparatus 3. It should be noted that the matchmaking server 200 determines whether or not a log of the game apparatus 3 is to be acquired, and notifies the game apparatus 3, whose log is to be acquired, of the determination result. Then, if a log of the game apparatus 3 is to be acquired, the log, of the processing, of the game apparatus 3 is transmitted from the game apparatus 3 to the log storage server 300 after the plurality of game apparatuses 3 perform the predetermined processing by communicating with each other.

The log processing server 400 automatically analyzes a log stored in the log storage server 300, thereby determining whether or not a user has committed a dishonest act in the processing indicated by the log. Then, if a dishonest act has been committed in the processing, the log processing server 400 selects a reason for reporting the user having committed the dishonest act, and transmits to the matchmaking server 200 the user ID of the user to be reported and the selected reason for reporting.

The log processing apparatus 500 analyzes (for example, by emulation) a log stored in the log storage server 300, using an actual apparatus (for example, an apparatus having a capability similar to that of the game apparatus 3), thereby determining whether or not a user has committed a dishonest act in the processing indicated by the log. Then, if a dishonest act has been committed in the processing, the log processing server 400 selects a reason for reporting the user having committed the dishonest act, and transmits to the matchmaking server 200 the user ID of the user to be reported and the selected reason for reporting.

The authentication server 600 is used to, when an attempt has been made to log in to the network 100 using the game apparatus 3, determine whether or not the user having attempted to log in is an authorized user. For example, the authentication server 600 manages the user IDs and the passwords of users of the network 100, together with the device ID of the game apparatus 3 used in the login process, and authenticates a user having attempted to log in, using data of their ID and password. Further, the authentication server 600 communicates with the matchmaking server 200 using a predetermined protocol, so that, if the matchmaking server 200 makes a request for confirmation of the authentication of the user and the device ID, the authentication server 300 gives a response to the request.

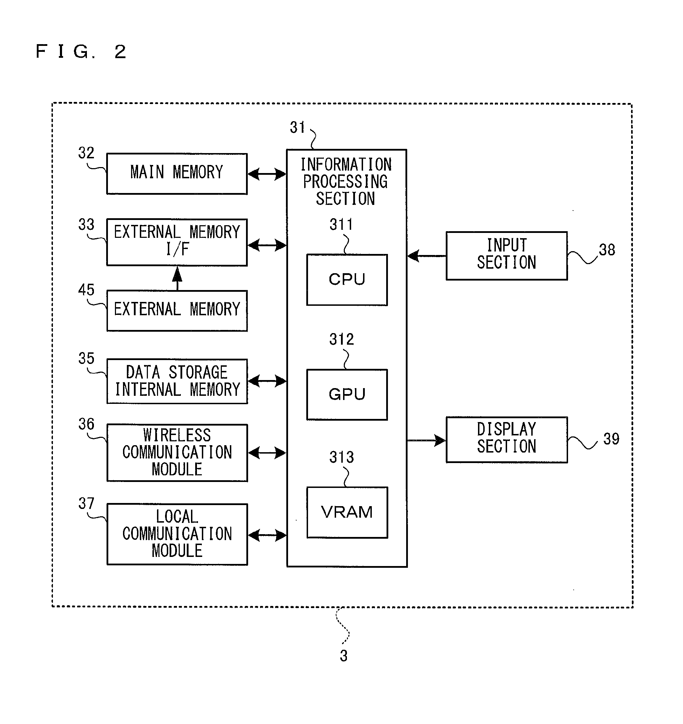

Next, with reference to FIG. 2, the game apparatus 3 is described. It should be noted that FIG. 2 is a block diagram showing an example of the configuration of the game apparatus 3.

In FIG. 2, the game apparatus 3 includes an information processing section 31, a main memory 32, an external memory interface (external memory I/F) 33, a data storage internal memory 35, a wireless communication module 36, a local communication module 37, an input section 38, a display section 39, and the like.

The information processing section 31 is information processing means including a CPU (Central Processing Unit) 311 that executes a predetermined program, a GPU (Graphics Processing Unit) 312 that performs image processing, and the like. In the present embodiment, a predetermined program is stored in a memory (for example, an external memory 45 connected to the external memory I/F 33 or the data storage internal memory 35) included in the game apparatus 3. The CPU 311 of the information processing section 31 executes the predetermined program, thereby performing communication processing and game processing described later. It should be noted that a program to be executed by the CPU 311 of the information processing section 31 may be acquired from another apparatus by communication with said another apparatus. The information processing section 31 also includes a VRAM (Video RAM) 313. The GPU 312 of the information processing section 31 generates an image in accordance with a command from the CPU 311 of the information processing section 31, and draws the generated image in the VRAM 313. Then, the GPU 312 of the information processing section 31 outputs the image drawn in the VRAM 313 to the display section 39. This causes the image to be displayed on the display section 39.

The information processing section 31 is connected to the main memory 32, the external memory I/F 33, and the data storage internal memory 35. The external memory I/F 33 is an interface for detachably connecting the external memory 45.

The main memory 32 is volatile storage means used as a work area and a buffer area of the information processing section 31 (the CPU 311). That is, the main memory 32 temporarily stores various data used in the image processing and the game processing, and temporarily stores a program acquired from outside the game apparatus 10 (from the external memory 45, another apparatus, or the like).

The external memory 45 is non-volatile storage means for storing a program to be executed by the information processing section 31. The external memory 45 is composed, for example, of a read-only semiconductor memory. The connection of the external memory 45 to the external memory I/F 33 enables the information processing section 31 to load a program stored in the external memory 45. The execution of the program loaded by the information processing section 31 results in performing predetermined processing.

The data storage internal memory 35 is composed of a readable and writable non-volatile memory (for example, a NAND flash memory), and is used to store predetermined data. For example, the data storage internal memory 35 has stored therein data and programs downloaded using wireless communication via the wireless communication module 36.

The wireless communication module 36 has the function of connecting to a wireless LAN by, for example, a method based on the IEEE 802.11b/g standard. Further, the local communication module 37 has the function of communicating wirelessly with a game apparatus of the same type by a predetermined communication method (for example, infrared communication). The wireless communication module 36 and the local communication module 37 are connected to the information processing section 31. The information processing section 31 can transmit and receive data to and from another device via the Internet, using the wireless communication module 36, or can transmit and receive data to and from another game apparatus of the same type, using the local communication module 37.

The input section 38 is formed of at least one of an operation button, a touch panel, a motion sensor, and the like, and is connected to the information processing section 31. The input section 38 outputs, to the information processing section 31, operation data representing the state of the input to the input section 38. The information processing section 31 acquires the operation data from the input section 38, thereby performing the processing based on the input to the input section 38.

The display section 39 is connected to the information processing section 31. The display section 39 displays an image in accordance with an instruction from the information processing section 31 (the GPU 312).

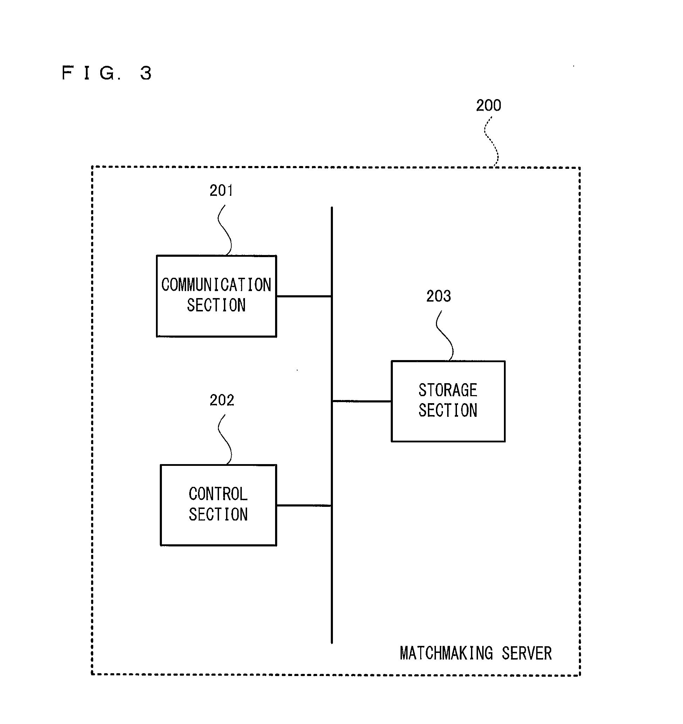

Next, with reference to FIG. 3, the matchmaking server 200 is described. It should be noted that FIG. 3 is a block diagram showing an example of the configuration of the matchmaking server 200.

The matchmaking server 200 includes a communication section 201, a control section 202, and a storage section 203. The communication section 201 transmits and receives communication packets, thereby communicating with the game apparatuses 3, the log processing server 400, the log processing apparatus 500, the authentication server 600, and the like via the network 100. When a plurality of apparatuses perform predetermined processing (for example, a communication game) by communicating with each other, the control section 202 performs: the process of determining the combination (matchmaking) of the game apparatuses 3 to perform the processing; the process of managing the report score of each of the users of the game apparatuses 3; and the process of determining whether or not a log of the predetermined processing is to be acquired after the predetermined processing. The control section 202 also establishes communication links to the game apparatuses 3, the log processing server 400, the log processing apparatus 500, the authentication server 600, and the like via the communication section 201, thereby controlling data transmission and selecting a path in the network 100. The storage section 203 stores: a program to be executed by the control section 202; various data necessary for the process of determining the combination of the game apparatuses 3; data representing report information reported by a user; data representing the report score of each user; various data necessary for communication with the game apparatuses 3, the log processing server 400, the log processing apparatus 500, and the authentication server 600; and the like. It should be noted that the matchmaking server 200 may be formed of a single server machine, or may be formed of a plurality of server machines. Further, in the illustration of FIG. 1, the matchmaking server 200, the log storage server 300, the log processing server 400, the log processing apparatus 500, and the authentication server 600 are formed of different apparatuses. Alternatively, at least two of the functions of these apparatuses may be achieved by a single apparatus (for example, a single server machine).

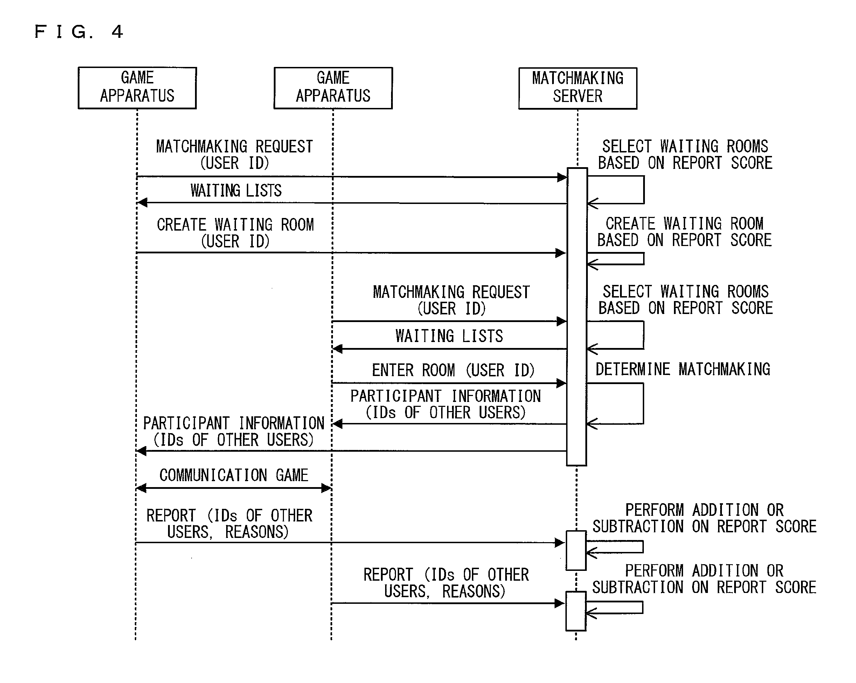

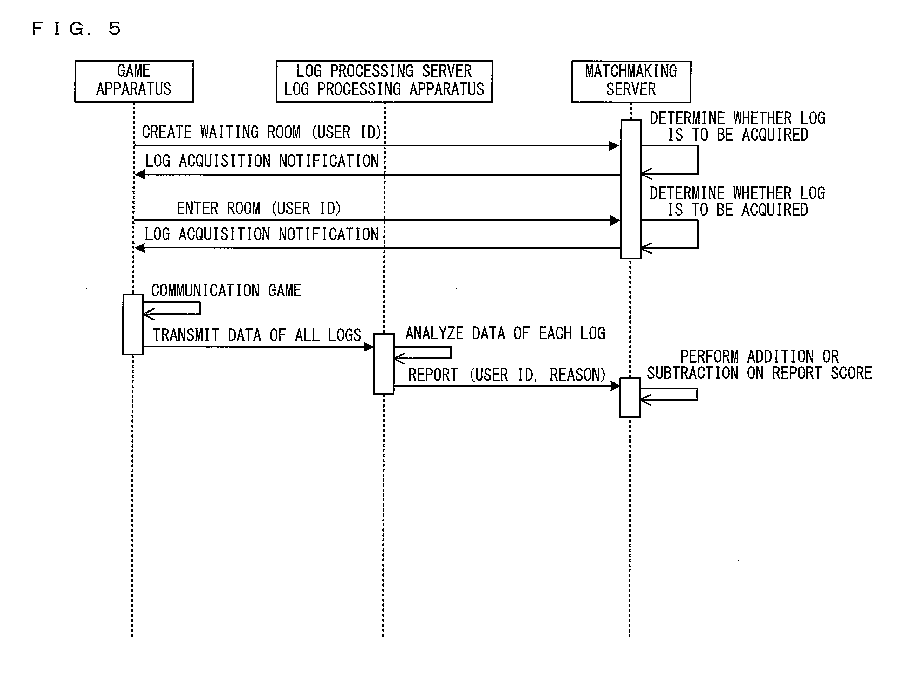

Next, with reference to FIGS. 4 and 5, descriptions are given of an overview of the processing performed by the communication system 1, before the descriptions of specific processing performed by the game apparatuses 3 and the matchmaking server 200. It should be noted that FIG. 4 is a chronological diagram showing an example of the interactions between apparatuses when, in the communication system 1, a user reports report information regarding a communication game. FIG. 5 is a chronological diagram showing an example of the interactions between apparatuses when, in the communication system 1, a log of the communication game is transmitted. It should be noted that the descriptions of the exemplary communication game with reference to FIGS. 4 and 5 are given using an example where: when a plurality of users perform one communication game by communicating with each other, one of the users creates a waiting room and waits for any of the other users to enter the room; and, when any of the other users have entered the waiting room so that the members are in the room, the members start the communication game together. It should be noted that the following descriptions are given using a communication game as an example of an application to be executed by the plurality of game apparatuses 3. Alternatively, the plurality of game apparatuses 3 may execute another application together, such as a chat in which communication is performed by exchanging short texts in real time.

Referring to FIG. 4, when a predetermined communication game is performed, any one of the users of the game apparatuses 3 makes a matchmaking request, to the matchmaking server 200, to set a combination with the other users. When making the matchmaking request, the game apparatus 3 transmits to the matchmaking server 200 the matchmaking request and information regarding the game for which to make the matchmaking request (information indicating the type of the game, the mode of the game, the level of the game, and the like), together with the user ID representing the user of the game apparatus 3. Here, the user ID may only need to be a unique code that enables the identification of the user, and may be, for example, an account ID, which is a character string serving as an indicator for the identification of the user.

The matchmaking server 200 confirms the report score of the user having made the matchmaking request. Then, the matchmaking server 200 selects waiting rooms based on the report score, from among waiting rooms already created for the game for which the matchmaking request has been made, and transmits, to the matchmaking request source, waiting lists showing the users waiting in the selected waiting rooms. For example, if the report score is less than a first threshold T1, the matchmaking server 200 determines regular waiting rooms (regular gatherings) from which to select a waiting room. If the report score is equal to or greater than the first threshold T1, the matchmaking server 200 determines isolated waiting rooms (exclusive gatherings) from which to select a waiting room.

Next, if the user of the game apparatus 3 having made the matchmaking request newly creates a waiting room with reference to the states of the waiting rooms based on the received waiting lists, the user makes a waiting room creation request to the matchmaking server 200. When making the waiting room creation request, the game apparatus 3 transmits the waiting room creation request together with the user ID to the matchmaking server 200.

The matchmaking server 200 confirms the report score of the user having made the waiting room creation request. Then, the matchmaking server 200 creates, for the requested game, a waiting room based on the report score, and newly registers the created waiting room. For example, if the report score is less than the first threshold T1, the matchmaking server 200 newly registers a regular waiting room. If the report score is equal to or greater than the first threshold T1, the matchmaking server 200 newly registers an isolated waiting room.

On the other hand, each of the users of the other game apparatuses 3 that performs the predetermined communication game also makes a matchmaking request, to the matchmaking server 200, to set a combination with the other users. Also when making the matchmaking request, the game apparatus 3 transmits to the matchmaking server 200 the matchmaking request and information regarding the game for which to make the matchmaking request, together with the user ID representing the user of the game apparatus 3. Then, the matchmaking server 200 selects waiting rooms based on the report score of the user having made the matchmaking request, and transmits, to the matchmaking request source, waiting lists showing the users waiting in the selected waiting rooms.

Next, if the user of the game apparatus 3 having made the matchmaking request enters desired one of the waiting rooms with reference to the states of the waiting rooms based on the received waiting lists, the user makes a waiting room participation request to the matchmaking server 200. When making the waiting room participation request, the game apparatus 3 transmits the waiting room participation request together with the user ID to the matchmaking server 200.

The matchmaking server 200 registers the user having made the participation request in the waiting room for which the participation request has been made. Then, the matchmaking server 200 transmits, to all the users participating in the waiting room in which the user has been newly registered, participant information indicating all the users (for example, the user IDs of all the participants). It should be noted that the matchmaking server 200 may transmit, to the user newly registered in the waiting room, participant information indicating the participants except for the user registered in the waiting room. Further, the matchmaking server 200 may transmit, to the users already registered in the waiting room, participant information indicating only the participant newly registered in the waiting room.

Next, the users participating in the waiting room start the communication game by communicating with each other, using a predetermined communication method (for example, a peer-to-peer communication method). Then, after the communication game ends, each user is given an opportunity to report the other users with which the user has performed the communication game. Here, the reports can be made regarding the opposing users with which the user has performed the communication game, the reports evaluating the opponents in the communication game (the presence or absence of a dishonest act, them being well-mannered, them being ill-mannered, or the like). If any one of the users of the game apparatuses 3 has made reports, the game apparatus 3 transmits, to the matchmaking server 200, information indicating the user IDs of the opposing users regarding which the reports have been made and the reasons for the reports.

Having received the reports from the user, the matchmaking server 200 calculates a report score for each of the reports. It should be noted that, as will be apparent later, a report score is defined in advance in the matchmaking server 200 with respect to each reason for reporting. Then, the matchmaking server 200 adds or subtracts the calculated report score to or from the report score already set for corresponding one of the reported users, and updates the report score of the reported user, using the report score after the addition or subtraction.

Next, with reference to FIG. 5, a description is given of an example of the operation performed when a log of the communication game is transmitted. Referring to FIG. 5, when having received a waiting room creation request from any one of the game apparatuses 3, the matchmaking server 200 determines whether or not a log, of the communication game, of the request source is to be acquired. If it has been determined that a log of the request source is to be acquired, the matchmaking server 200 transmits a log acquisition notification to the user having made the request.

In addition, when having received a waiting room participation request from any one of the game apparatuses 3, the matchmaking server 200 determines whether or not a log, of the communication game, of the request source is to be acquired. As a first example, if the user of the game apparatus 3 whose log is to be acquired as described above is included in the waiting room for which the participation request has been made, the matchmaking server 200 determines that a log, of the communication game, of the user having made the participation request is also to be acquired. Then, the matchmaking server 200 transmits a log acquisition notification to the user having made the participation request. As a second example, if logs of the users already participating in the waiting room for which the participation request has been made are not to be acquired, but a log, of the communication game, of the user having newly made the participation request is to be acquired, the matchmaking server 200 determines that logs, of the communication game, of all the participants in the waiting room are to be acquired. Then, the matchmaking server 200 transmits a log acquisition notification to all the participants in the waiting room.

Having received the log acquisition notification, each of the game apparatuses 3 performs the communication game, and then transmits a log, of the communication game, of the game apparatus 3 to the log storage server 300. Here, examples of the log transmitted from the game apparatus 3 to the log storage server 300 include: event data in which events (an action, a particular event, an operation, and the like) having occurred in the application (the communication game) are recorded; and ghost data for reproducing a play in the communication game. It should be noted that, having received the log acquisition notification, the game apparatus 3 may not only transmit a log of the game apparatus 3, but also simultaneously transmit logs of the plays of the opposing users with which the user of the game apparatus 3 has performed the communication game. Further, as is apparent from the above description, all the users having played the communication game of which logs are to be acquired receive a log acquisition notification. In this case, all the users having played the communication game of which logs are to be acquired transmit logs of the communication game including logs of the opposing users, to the log storage server 300.

The log processing server 400 and/or the log processing apparatus 500 analyzes each log of the communication game stored in the log storage server 300, and determines whether or not dishonesty has been committed in the communication game for which the analysis is made. Then, if dishonesty has been committed in the communication game, the log processing server 400 and/or the log processing apparatus 500 makes a report to the matchmaking server 200. For example, when making the report, the log processing server 400 and/or the log processing apparatus 500 transmits, to the matchmaking server 200, information indicating the user ID of the user having committed the dishonesty and the reason for the report.

When analyzing each log of the communication game, the log processing server 400 determines whether or not the user has committed a dishonest act, by automatically analyzing determination criteria defined in advance, such as whether or not an unlikely play (for example, the fact that an unlikely number of items are used, the fact that a movement is made in a space where no movement can be made, or the like) has been performed in the communication game in the processing indicated by the log. Further, when analyzing each log of the communication game, the log processing apparatus 500 determines whether or not the user has committed a dishonest act, by analyzing (reproducing) the processing indicated by the log, using an actual apparatus (for example, an apparatus having a capability similar to that of the game apparatus 3). Here, in the log analysis using the log processing apparatus 500, an operator who operates the communication game may themselves monitor the log and determine the presence or absence of a dishonest act in the monitoring.

It should be noted that, if all the users having played the communication game of which logs are to be acquired transmit logs of the communication game including logs of the opposing users to the log storage server 300, the log processing server 400 and/or the log processing apparatus 500 can confirm the consistency between the transmitted logs. For example, if logs of the communication game executed by a first game apparatus 3a and a second game apparatus 3b are to be acquired, the log processing server 400 and/or the log processing apparatus 500 can confirm the consistency between a log of the first game apparatus 3a acquired from the first game apparatus 3a and a log of the first game apparatus 3a acquired from the second game apparatus 3b. Further, the log processing server 400 and/or the log processing apparatus 500 can also confirm the consistency between a log of the second game apparatus 3b acquired from the second game apparatus 3b and a log of the second game apparatus 3b acquired from the first game apparatus 3a. Thus, in the log analysis of the communication game, not only a log of a particular user but also logs of all the users having participated in the communication game are to be analyzed. Thus, even if a particular user transmits their log by falsifying it, consistency is confirmed between the falsified log with a log of the particular user transmitted from any of the other users, which makes it possible to detect the falsified log. Further, if a particular user stops playing the communication game in the middle and does not transmit their log after the communication game ends, it is possible to detect the user having stopped playing the communication game in the middle, by analyzing a log of the particular user transmitted from any of the other users.

In addition, having received the log acquisition notification, each of the game apparatuses 3 may transmit, to the log storage server 300, information indicating the start of the communication game of which a log is to be acquired, before starting the communication game. Here, examples of the information indicating the start of the communication game may include an empty log of the communication game. The information indicating the start of the communication game may thus be transmitted to the log storage server 300, whereby it is possible to detect, by log analysis using the log processing server 400 and/or the log processing apparatus 500, that even a user has stopped playing the communication game after the start of the communication game, because the transmitted information is uploaded to the log storage server 300. Thus, the log processing server 400 and/or the log processing apparatus 500 can add the presence or absence of a stoppage in the communication game as an element of the evaluation of a user.

Having received the reports from the log processing server 400 and/or the log processing apparatus 500, the matchmaking server 200 calculates a report score for each of the reports. Then, the matchmaking server 200 adds or subtracts the calculated report score to or from the report score already set for each of the reported users, and updates the report score of the user, using the report score after the addition or subtraction. It should be noted that the report score may be set such that the absolute value of the report score for a report regarding a dishonest act from the log processing server 400 and/or the log processing apparatus 500 is large relative to a report regarding a dishonest act from a user. For example, a report from a user may lead to a false report, whereas a report based on log analysis has a relatively high credibility. Thus, a report score may be set in accordance with the credibility of log analysis, which makes it possible to enhance the credibility of the report score.

As described above, a report score is used by the matchmaking server 200 to combine users to participate in the communication game. Alternatively, a report score may also be used as determination criteria for suspending the account of a user. For example, a third threshold T3 is set that is relatively greater than the first threshold T1 used to select waiting rooms, and a user of which the report score in the communication game is equal to or greater than the third threshold T3 is extracted so that the account of the extracted user for the communication game is to be suspended. Then, if a dishonest act has been confirmed as a result of a predetermined confirmation of the user whose account is to be suspended, such as a predetermined apparatus or an operator reanalyzing a log, of the communication game, of the user, the account of the user may be suspended for the communication game. In this case, the authentication server 600 may be notified of information indicating the user ID of the user whose account is to be suspended and the type of the communication game, whereby the authentication server 600 may perform the process of suspending the account. It should be noted that the procedure described above shows the example where the process of suspending the account of the user whose account is to be suspended is performed after a predetermined confirmation of the user is performed. Alternatively, immediately after the report score of a user becomes equal to or greater than the third threshold T3 and the account of the user is to be suspended, the process of suspending the account of the user may be performed without performing the confirmation of the user.

As described above, it is possible to select a waiting room for the communication game on the basis of the report score calculated for each user. This makes it possible to combine users in the communication game in accordance with the superiority or inferiority of their report scores. This prevents the combination of a user relatively excellent in their report score and a user relatively inferior in their report score. Here, the report score of each user is calculated on the basis of the reports from the opposing users with which the user has performed the communication game. This makes it possible to reduce the processing load of the matchmaking server 200 and the workload of a server operator. Further, the report score of each user can be calculated on the basis of the log analysis of the communication game, in which case, however, some of the logs of the communication game are to be acquired. This also makes it possible to reduce the processing load of the matchmaking server 200 and the workload of a server operator while improving the credibility of the report scores by the log analysis.

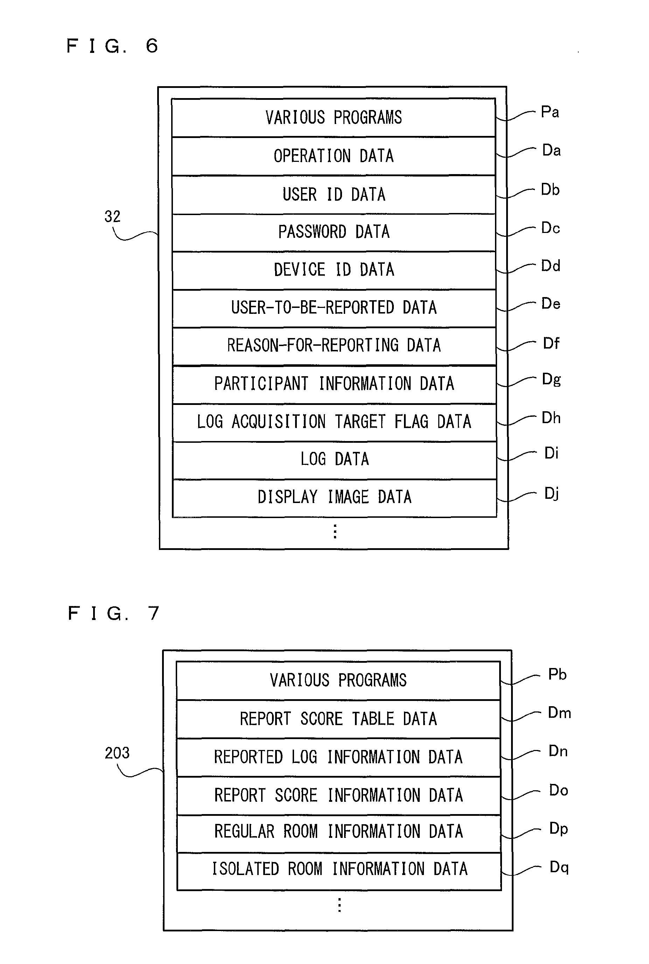

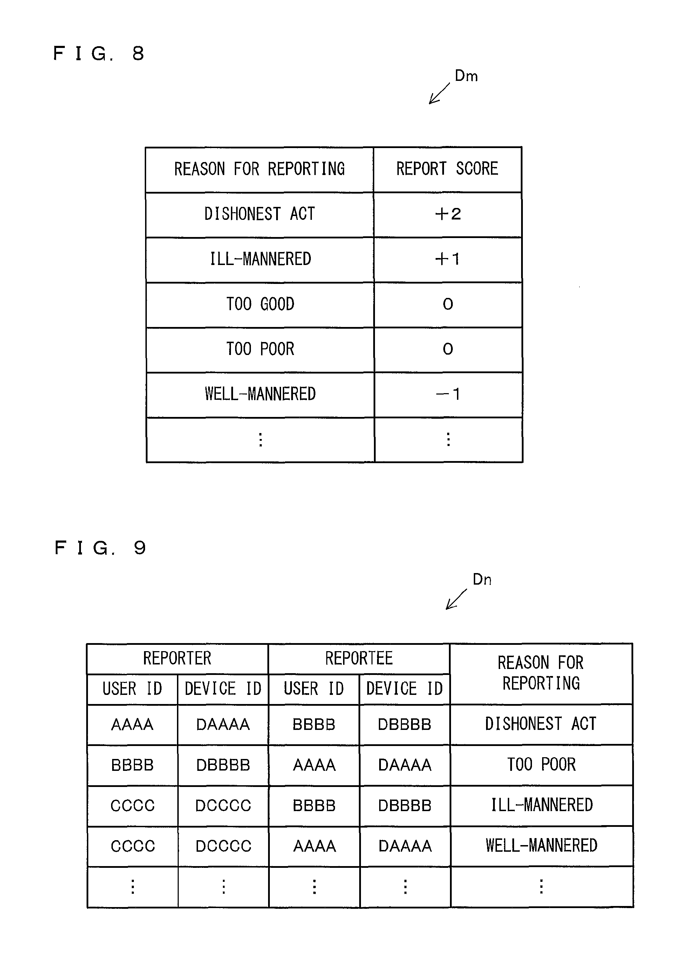

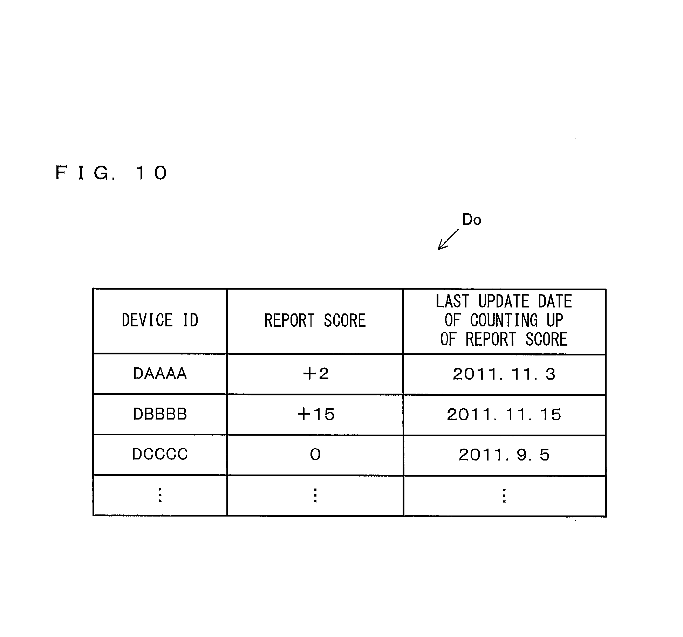

Next, a detailed description is given of the processing performed by the communication system 1. First, with reference to FIGS. 6 through 10, main data used in the processing is described. It should be noted that FIG. 6 is a diagram showing examples of main data and programs stored in the main memory 32 of the game apparatus 3. FIG. 7 is a diagram showing examples of main data and programs stored in the storage section 203 of the matchmaking server 200. FIG. 8 is a diagram showing an example of report score table data Dm stored in the storage section 203. FIG. 9 is a diagram showing an example of reported log information data Dn stored in the storage section 203. FIG. 10 is a diagram showing an example of report score information data Do stored in the storage section 203.

As shown in FIG. 6, the following are stored in the data storage area of the main memory 32: operation data Da; user ID data Db; password data Dc; device ID data Dd; user-to-be-reported data De; reason-for-reporting data Df; participant information data Dg; log acquisition target flag data Dh; log data Di; display image data Dj; and the like. It should be noted that the main memory 32 stores, as well as the data included in the information shown in FIG. 6, data and the like necessary for the processing, such as data used in an application to be executed. Further, in the program storage area of the main memory 32, various programs Pa included in the communication program are stored.

The operation data Da is data representing operation information of the operation performed on the game apparatus 3 by a user. For example, operation data indicating the operation performed on an operation button or the like is acquired per time unit that the game apparatus 3 performs processing (for example, every 1/60 second), and the operation data is stored and updated in the operation data Da in accordance with the acquisition.

The user ID data Db is data representing a unique code (a user ID) that enables the identification of the user who uses the game apparatus 3, and is data representing, for example, an account ID, which is a character string serving as an indicator for the identification of the user. The password data Dc is data representing a password used to log in to the network 100 using the game apparatus 3.

The device ID data Dd is data representing a unique code (a device ID) that enables the identification of the game apparatus 3, and is data representing, for example, an unalterable character string serving as an indicator for the identification of the device. The device ID data Dd stores the device ID set in advance for the game apparatus 3.

The user-to-be-reported data De is data representing, when the user makes a report, a user to be reported, and is data representing, for example, the user ID of the user to be reported. The reason-for-reporting data Df is data representing a reason for reporting selected by the user when making a report.

The participant information data Dg is data representing, when a communication game is performed, participants in the communication game, and is data representing, for example, the user IDs of all the participants participating in the communication game.

The log acquisition target flag data Dh is data representing a log acquisition target flag that is set to on when a log, of the communication game, of the user is designated to be acquired, by the matchmaking server 200. It should be noted that the log acquisition target flag is initialized to off when a game application described later is started. The log data Di is data representing a log when the user has performed the communication game, and stores logs of all the users having participated in the communication game.

The display image data Dj is data for generating an image in which an object, a character, a background, and the like are placed, and displaying the image on the display section 39.

As shown in FIG. 7, the following are stored in the data storage area of the storage section 203: report score table data Dm; reported log information data Dn; report score information data Do; regular room information data Dp; isolated room information data Dq; and the like. It should be noted that the storage section 203 may store, as well as the data included in the information shown in FIG. 7, data and the like necessary for the processing performed by the matchmaking server 200. Further, in the program storage area of the storage section 203, various programs Pb for achieving the above processing are stored.

As shown in FIG. 8, the report score table data Dm is data representing a report score set in advance with respect to each reason for reporting from a user. For example, if a reason for reporting from a user is a "dishonest act", the report score is set to +2. If a reason for reporting from a user is "ill-mannered", the report score is set to +1. If a reason for reporting from a user is "too good" or "too poor", the report score is set to o. If a reason for reporting from a user is "well-mannered", the report score is set to -1.

As described above, in the example shown in FIG. 8, the report score is set in accordance with the degree of inferiority in the reason for reporting regarding the communication game such that the higher the degree of inferiority, the larger the value. Further, if a report is made regarding an opponent who is excellent in the communication game, the report score is set to a negative value. This enables a user to reduce their own report score by performing a well-mannered game play without committing any dishonest act. This can also lead to recommending that each user should perform an excellent play. Further, in the example shown in FIG. 8, the report score corresponding to a certain reason for reporting is set to o. As will be apparent later, a user can select a reason for reporting from among a plurality of options. On the other hand, a report may be made on the basis of the level of play of a user, such as whether the user is an expert or a beginner in the game. That is, if it is only possible to select reasons for reporting corresponding to the cases where the game play of an opponent is inferior, a report is made always for a reason for reporting resulting from inferiority even if the inferiority of the opponent in the communication game is not actually the reason for reporting. Thus, if a reason for reporting results neither from inferiority nor excellence, the options including a reason for reporting that does not affect the report score make it possible to prevent a user from making an incorrect report.

It should be noted that, if such effects are not desired, the report scores set in accordance with the reasons for reporting may be positive values only, or may be the combination of a positive value and a value of zero, or the combination of a positive value and a negative value. Even such settings of the report scores make it possible to set the report scores based on the degrees of inferiority. This makes it possible to, in a matchmaking process described later, stratify users on the basis of the degrees of inferiority in the communication game.

As shown in FIG. 9, the reported log information data Dn is data representing a reported log reported to the matchmaking server 200 by a user. For example, the reported log information data Dn is data representing, with respect to each report, the user ID and the device ID of the reporter, the user ID and the device ID of the reportee, the reason for reporting from the reporter.

As shown in FIG. 10, the report score information data Do is data representing a report score set for each user. For example, the report score information data Do is data representing the device ID, the report score, and the last update date of the report score of each user.

The regular room information data Dp is data regarding regular waiting rooms set for each game, and is data representing the number, the types, and the like of regular waiting rooms, together with the users waiting each of in the regular waiting rooms. The isolated room information data Dq is data regarding isolated waiting rooms set for each game, and is data representing the number, the types, and the like of isolated waiting rooms, together with the users waiting in each of the isolated waiting rooms. Here, the term "isolated" refers to an environment isolated from regular waiting rooms. A user of which the report score is equal to or greater than the first threshold T1 can use only isolated waiting rooms.

It should be noted that, in the above descriptions, the regular room information data Dp for regular waiting rooms and the isolated room information data Dq for isolated waiting rooms are separately set. Alternatively, one item of data for waiting rooms may be used. For example, in the one item of data for waiting rooms, a flag that distinguishes between a regular waiting room and an isolated waiting room (for example, a flag that is set to off in the case of a regular waiting room and set to on in the case of an isolated waiting room) may be set, so that the regular room information data Dp and the isolated room information data Dq may be operated by distinguishing them using this flag.

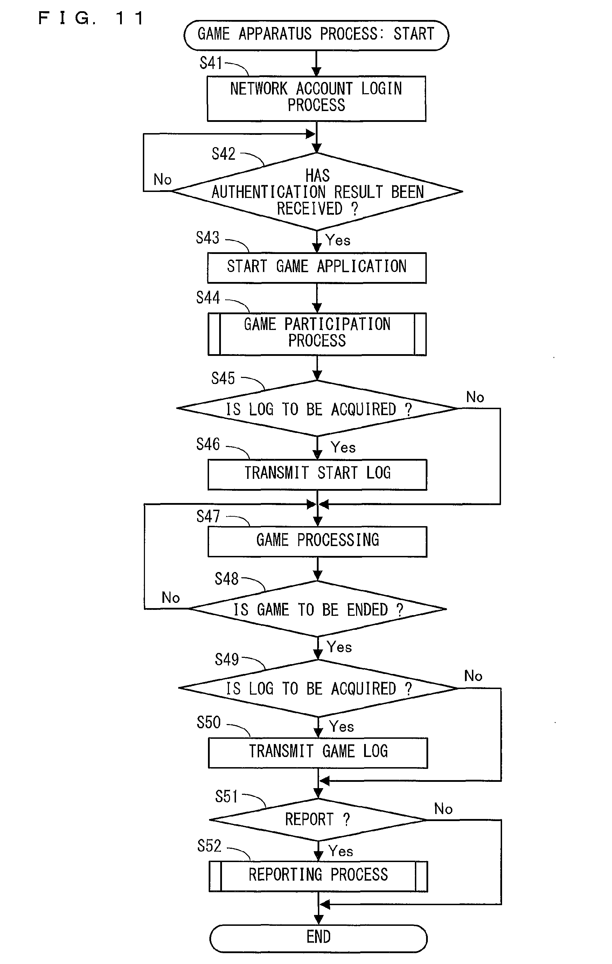

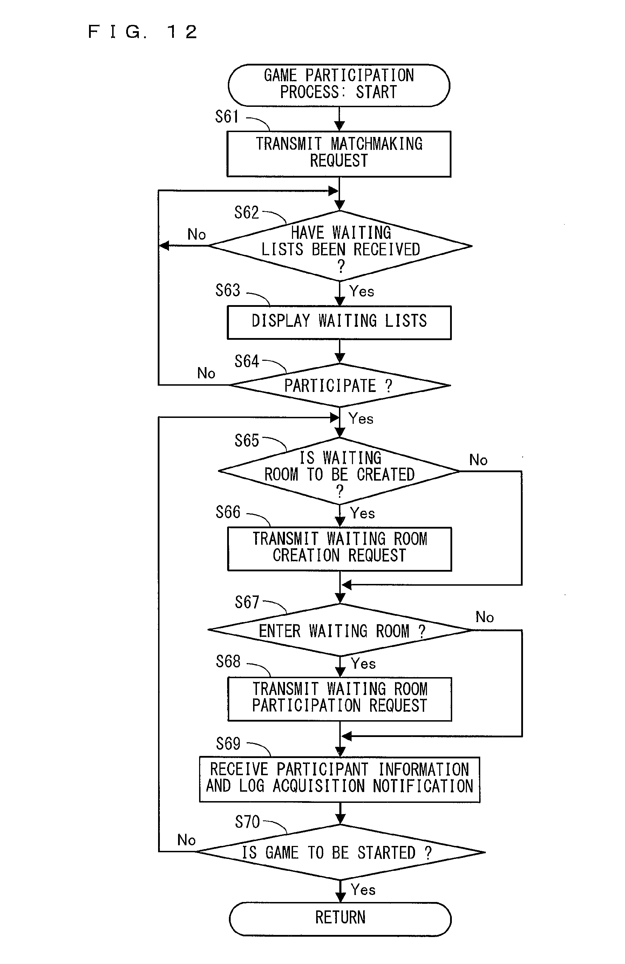

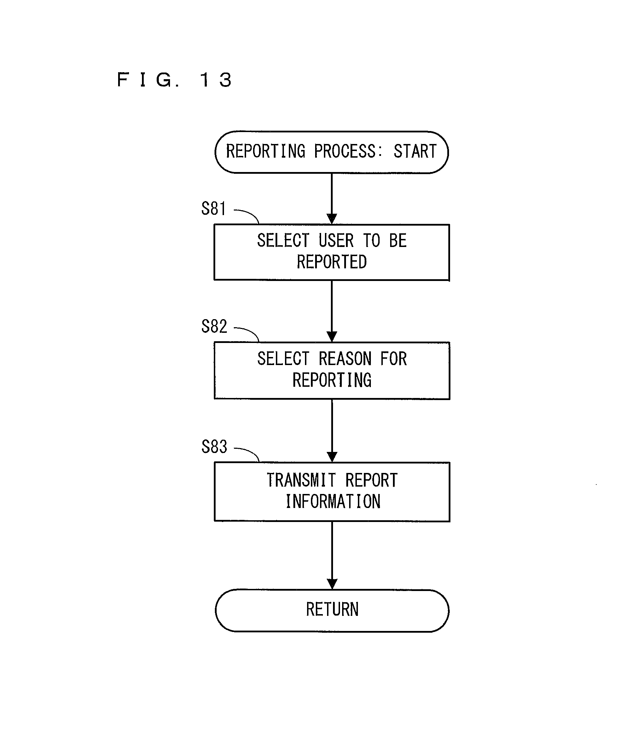

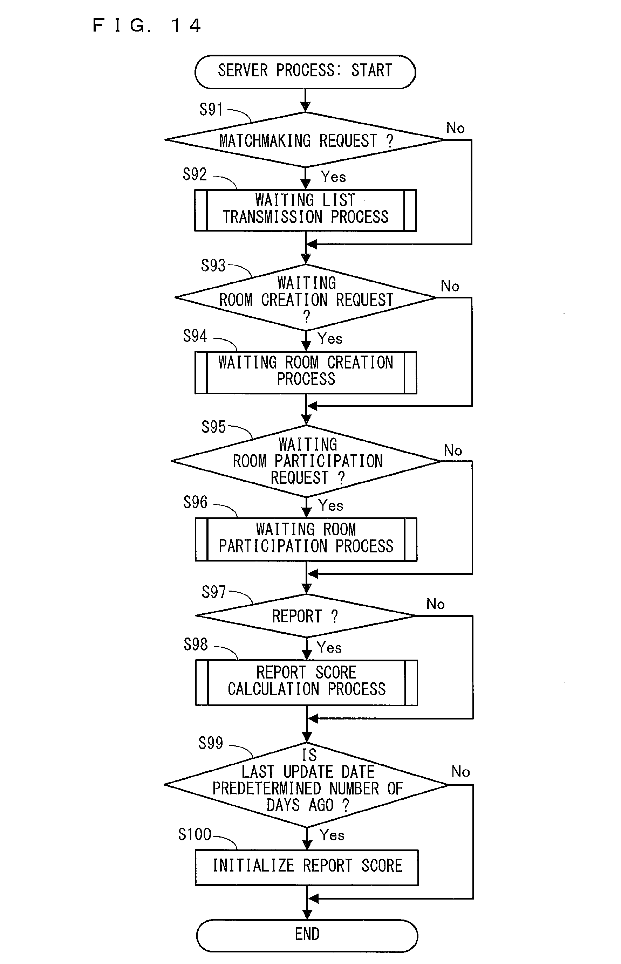

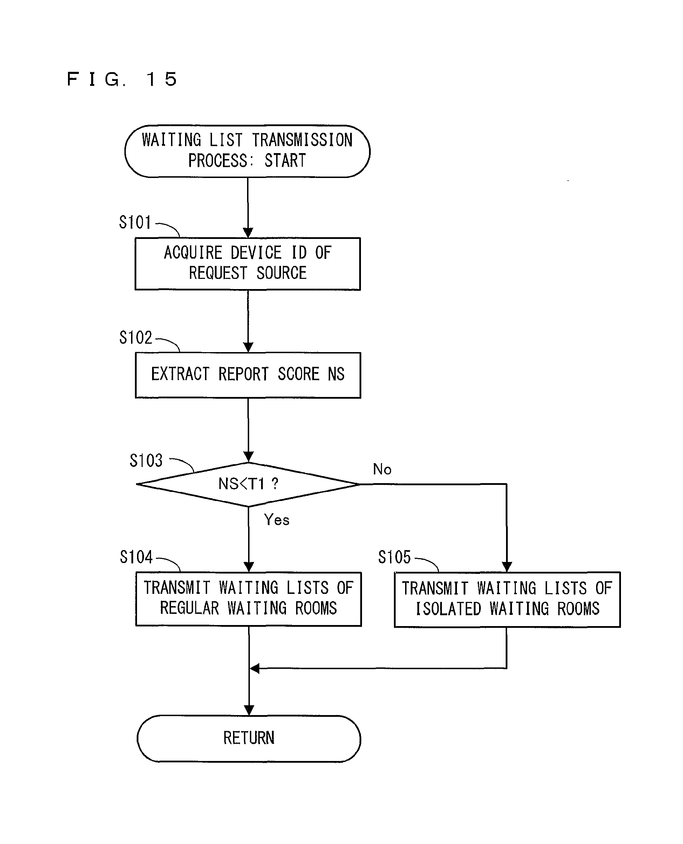

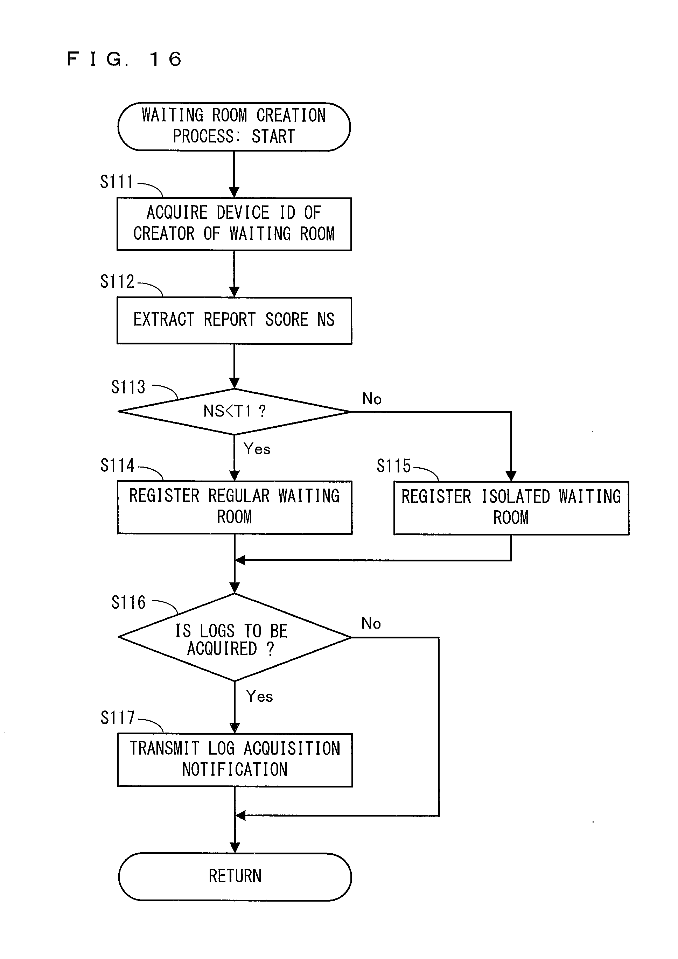

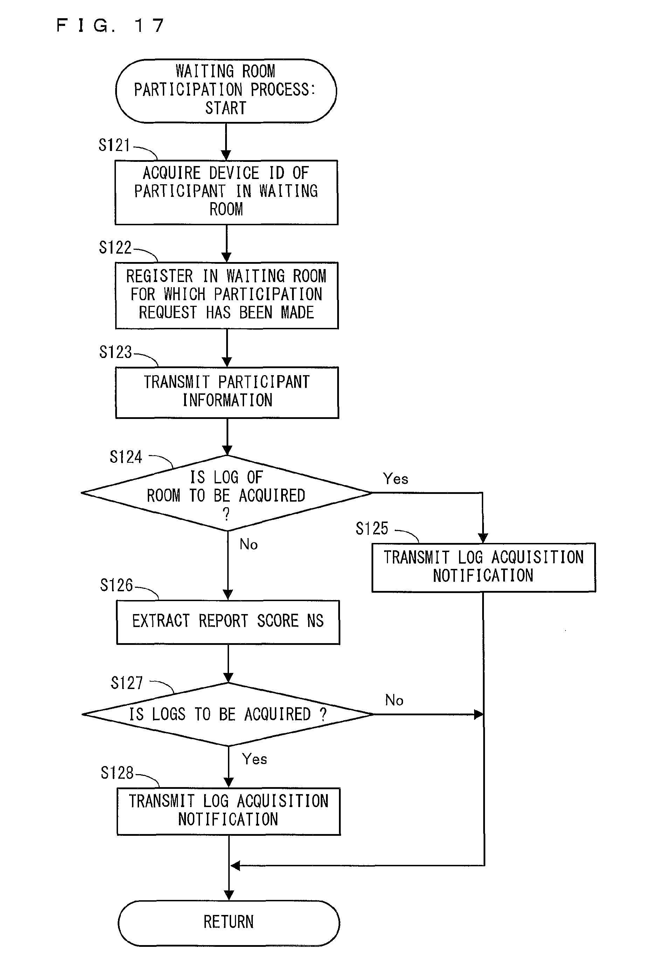

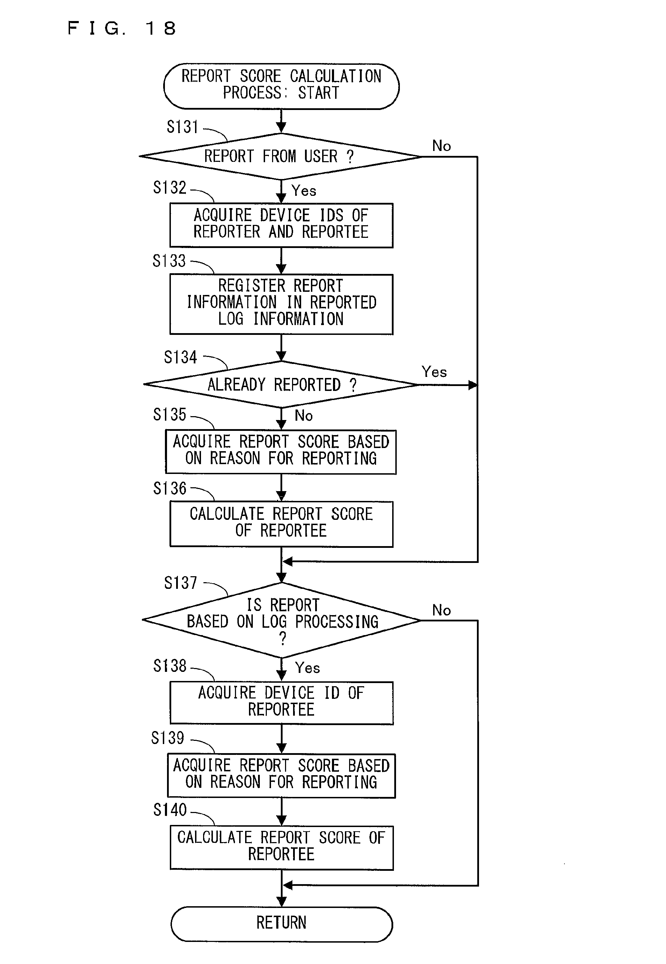

Next, with reference to FIGS. 11 through 18, detailed descriptions are given of the processing performed by the game apparatus 3 and the matchmaking server 200. It should be noted that FIG. 11 is a flow chart showing an example of the processing performed by the game apparatus 3. FIG. 12 is a subroutine flow chart showing an example of a game participation process in step 44 of FIG. 11. FIG. 13 is a subroutine flow chart showing an example of a reporting process in step 52 of FIG. 11. FIG. 14 is a flow chart showing an example of the processing performed by the matchmaking server 200. FIG.15 is a subroutine flow chart showing an example of a waiting list transmission process in step 92 of FIG.14. FIG. 16 is a subroutine flow chart showing an example of a waiting room creation process in step 94 of FIG.14. FIG.17 is a subroutine flow chart showing an example of a waiting room participation process in step 96 of FIG. 14. FIG. 18 is a subroutine flow chart showing an example of a report score calculation process in step 98 of FIG. 14. Here, in the flow charts shown in FIGS. 11 through 18, descriptions are given mainly of, in the processing performed by the communication system 1, the process of calculating a report score and the process of acquiring a log. Detailed descriptions of other processes not directly related to these processes are omitted. Further, in FIGS.11 through 18, all the steps performed by the CPU 311 are abbreviated as "S".

When the game apparatus 3 is turned on, the CPU 311 of the game apparatus 3 executes the boot program stored in the ROM/RTC 13, thereby initializing each unit such as the main memory 32. Then, the communication program stored in the external memory 45 or the like is loaded into the main memory 32, and the CPU 311 starts the execution of the information processing program. The flow charts shown in FIGS. 11 through 13 are flow charts showing the processing performed after the above processes completed.

Referring to FIG. 11, the CPU 311 performs the process of logging in to the network 100 (step 41), and proceeds to the subsequent step. For example, the CPU 311 performs the process of logging in to the network 100 using the user ID represented by the user ID data Db, the password represented by the password data Dc, and the device ID represented by the device ID data Dd. The authentication server 600 connected to the network 100 authenticates the account using the user ID and the password transmitted in the login process, and sends the authentication result to the transmission source (the game apparatus 3). It should be noted that, in the present invention, the authentication server 600 manages the user IDs and the passwords of users of the network 100, together with the device ID of the game apparatus 3 used in the login process, by associating the device ID with the user ID.

Next, the CPU 311 waits for the authentication result from the authentication server 600 (step 42). If login rights have been confirmed by the authentication of the account, the CPU 311 proceeds to the subsequent step 43.

In step 43, the CPU 311 starts a game application. Then, the CPU 311 performs a game participation process (step 44), and proceeds to the subsequent step. With reference to FIG.12, a description is given below of the game participation process performed in the above step 44.

Referring to FIG.12, to perform the game started in the above step 44 in the form of a communication game in which other users also participate, the CPU 311 transmits a matchmaking request to the matchmaking server 200 (step 61). It should be noted that, when transmitting the matchmaking request, the CPU 311 transmits, to the matchmaking server 200, information regarding the game for which to make the matchmaking request (information indicating the type of the game, the mode of the game, the level of the game, and the like), together with the user ID representing the user of the game apparatus 3 (the user ID represented by the user ID data Db). Then, the CPU 311 waits for waiting lists transmitted from the matchmaking server 200 (step 62). If the CPU 311 has received the waiting lists, the CPU 311 proceeds to the subsequent step 63.

In step 63, on the basis of the received waiting lists, the CPU 311 causes the current states of waiting rooms to be displayed on the display section 39, and proceeds to the subsequent step. Here, the matchmaking server 200 transmits, to the matchmaking request source, waiting lists based on the reported level of the user having made the matchmaking request. Specifically, if the reported level of the user having made the matchmaking request is less than the first threshold T1, the matchmaking server 200 transmits the number, the types, and the like of regular waiting rooms, together with waiting lists showing the users waiting in the regular waiting rooms. If, on the other hand, the reported level of the user having made the matchmaking request is equal to or greater than the first threshold T1, the matchmaking server 200 transmits the number, the types, and the like of isolated waiting rooms, together with waiting lists showing the users waiting in the isolated waiting rooms. Thus, in the above step 63, on the display section 39 of the game apparatus 3, the states of regular waiting rooms are displayed if the reported level of the user is less than the first threshold T1, and the states of isolated waiting rooms are displayed if the reported level of the user is equal to or greater than the first threshold T1.

Next, the CPU 311 determines whether or not the user is to participate in the communication game started in step 44 (step 64). For example, with reference to the operation data Da, if having determined that the user has performed the operation of participating in the communication game, the CPU 311 determines that the user is to participate in the communication game. Then, if the user is to participate in the communication game, the CPU 311 proceeds to the subsequent step 65. If, on the other hand, the user is not to participate in the communication game, the CPU 311 returns to the above step 62, and repeats the process thereof.

In step 65, the CPU 311 determines whether or not the the user is to newly create a waiting room. For example, with reference to the operation data Da, if having determined that the user has performed the operation of newly creating a waiting room, the CPU 311 determines that the user is to newly create a waiting room. Then, if the user is to newly create a waiting room, the CPU 311 proceeds to the subsequent step 66. If, on the other hand, the user is not to newly create a waiting room, the CPU 311 proceeds to the subsequent step 67.

In step 66, the CPU 311 transmits a waiting room creation request to the matchmaking server 200, and proceeds to the subsequent step 67. It should be noted that, when transmitting the waiting room creation request, the CPU 311 transmits, to the matchmaking server 200, information regarding the game for which to create the waiting room (information indicating the type of the game, the mode of the game, the level of the game, and the like), together with the user ID representing the user of the game apparatus 3 (the user ID represented by the user ID data Db).

In step 67, the CPU 311 determines whether or not the user is to enter any one of the already created waiting rooms. For example, with reference to the operation data Da, if having determined that the user has performed the operation of entering any one of the waiting rooms, the CPU 311 determines that the user is to enter any one of the waiting rooms. Then, if the user is to enter any one of the waiting rooms, the CPU 311 proceeds to the subsequent step 68. If, on the other hand, the user is not to enter any one of the waiting rooms, the CPU 311 proceeds to the subsequent step 69.

In step 68, the CPU 311 transmits a waiting room participation request to the matchmaking server 200, and proceeds to the subsequent step 69. It should be noted that, when transmitting the waiting room participation request, the CPU 311 transmits, to the matchmaking server 200, information regarding the waiting room which has been selected from among the waiting rooms displayed in the above step 63 and for which to make the participation request, together with the user ID representing the user of the game apparatus 3 (the user ID represented by the user ID data Db).

In step 69, the CPU 311 receives participant information and a log acquisition notification from the matchmaking server 200, and proceeds to the subsequent step. Here, if a new user has been registered in a waiting room, the matchmaking server 200 transmits, to all the users participating in the waiting room, participant information indicating all the users (for example, the user IDs of all the participants). As an example, every time a user is newly registered in a waiting room, the matchmaking server 200 transmits, to the users already registered in the waiting room, participant information indicating the newly registered user. Further, the matchmaking server 200 transmits, to the user newly registered in the waiting room, participant information indicating the users already registered in the waiting room. Further, when a waiting room has been created and when a user is registered in a waiting room, if a log of the waiting room is to be acquired, the matchmaking server 200 transmits a log acquisition notification to the users registered in the waiting room. In the above step 69, the process is performed of receiving participant information and/or a log acquisition notification thus transmitted from the matchmaking server 200. Then, the CPU 311 updates the participant information data Dg using the received participant information. Further, if having received the log acquisition notification, the CPU 311 sets the log acquisition target flag to on, and updates the log acquisition target flag data Dh.

Next, the CPU 311 determines whether or not the communication game is to be started (step 70). Examples of conditions for starting the communication game include: the satisfaction of the condition under which the communication game is started (for example, the number of participants has reached a predetermined number, or a predetermined time has elapsed since the recruitment of participants started); and the fact that the user has performed the operation of starting the communication game. If the communication game is not to be started, the CPU 311 returns to the above step 65, and repeats the process thereof. If the communication game is to be started, the CPU 311 ends the processing of this subroutine.

Referring back to FIG. 11, after the game participation process in the above step 44, the CPU 311 determines whether or not a log of the communication game in which the user has participated in the above step 44 is to be acquired (step 45). For example, if the log acquisition target flag represented by the log acquisition target flag data Dh is set to on, the CPU 311 determines that a log of the communication game is to be acquired. Then, if a log of the communication game is to be acquired, the CPU 311 proceeds to the subsequent step 46. If, on the other hand, a log of the communication game is not to be acquired, the CPU 311 proceeds to the subsequent step 47.

In step 46, the CPU 311 transmits to the log storage server 300 a log indicating that the communication game has been started, and proceeds to the subsequent step 47. For example, the CPU 311 notifies the log storage server 300 of the start of the communication game and the participants in the communication game by sending an empty log and the user IDs representing the participants in the communication game (including the user ID of the user of the game apparatus 3). It should be noted that the empty log transmitted in the above step 46 is an example of information indicating the start of the communication game. Alternatively, other data may be transmitted so long as it can indicate the start of the communication game.

In step 47, the CPU 311 performs game processing on the basis of the started game application, and proceeds to the subsequent step. It should be noted that, in the above step 47, on the basis of the participant information represented by the participant information data Dg, the communication game is executed in which the users of the other game apparatuses 3 indicated by the participant information participate, while the game apparatus 3 communicates with the other game apparatuses 3. Further, the CPU 311 records a log of the game processing performed in the above step 47 in the log data Di, so as to include logs of the other participants.

Next, the CPU 311 determines whether or not the game is to be ended (step 48). Examples of conditions for ending the game include: the satisfaction of the conditions under which the game is ended (for example, the game is over); and the fact that the user has performed the operation of ending the game. If the game is not to be ended, the CPU 311 returns to the above step 47, and repeats the process thereof. If the game is to be ended, the CPU 311 proceeds to the subsequent step 49.

In step 49, the CPU 311 determines whether or not a log of the communication game in which the user has participated in the above step 44 is to be acquired. For example, if the log acquisition target flag represented by the log acquisition target flag data Dh is set to on, the CPU 311 determines that a log of the communication game is to be acquired. Then, if a log of the communication game is to be acquired, the CPU 311 proceeds to the subsequent step 50. If, on the other hand, a log of the communication game is not to be acquired, the CPU 311 proceeds to the subsequent step 51.

In step 50, the CPU 311 transmits to the log storage server 300 the logs of the communication game executed in the above step 47, and proceeds to the subsequent step 51. For example, the CPU 311 transmits the logs of the communication game and the participants in the communication game to the log storage server 300 by sending a game log represented by the log data Di and the user IDs representing the participants in the communication game (including the user ID of the user of the game apparatus 3).

In step 51, the CPU 311 determines whether or not the user is to make a report. For example, when the communication game has ended, the CPU 311 causes a report button to be displayed on the display section 39, the button indicating that the process of making a report regarding the communication game is to be performed. Then, with reference to the operation data Da, if having determined that the user has performed the operation of selecting the report button displayed on the display section 39, the CPU 311 determines that the user is to make a report. Then, if the user is to make a report, the CPU 311 proceeds to the subsequent step 52. If, on the other hand, the user is to make a report, the CPU 311 ends the processing indicated in the flow chart.

In step 52, the CPU 311 performs a reporting process, and ends the processing indicated in the flow chart. With reference to FIG. 13, a description is given below of the reporting process performed in the above step 52.

Referring to FIG. 13, the CPU 311 selects a user to be reported (step 81), and proceeds to the subsequent step. For example, on the basis of the participants represented by the participant information data Dg, the CPU 311 causes a list of the other users having participated in the communication game having ended, to be displayed on the display section 39, thereby prompting the user to select a user to be reported. Then, with reference to the operation data Da, the CPU 311 extracts any one of the other users (a user to be reported) selected by the user using the input section 38, and updates the user-to-be-reported data De using the user ID representing the extracted user.

Next, the CPU 311 selects a reason for reporting (step 82), and proceeds to the subsequent step. For example, the CPU 311 causes a plurality of reasons for reporting set in advance, to be displayed on the display section 39, thereby prompting the user to select a reason for reporting. Examples of the reasons for reporting from which the CPU 311 prompts the user to select may include options, as shown in FIG. 8, such as "dishonest act", "ill-mannered", "too good", "too poor", and "well-mannered". Then, with reference to the operation data Da, the CPU 311 extracts the reason for reporting selected by the user using the input section 38, and updates the reason-for-reporting data Df using the extracted reason for reporting.

Next, the CPU 311 transmits report information to the matchmaking server 200 (step 83), and ends the processing of this subroutine. For example, the CPU 311 transmits report information to the matchmaking server 200 using information indicating the user ID of the user to be reported that is represented by the user-to-be-reported data De and the reason for reporting that is represented by the reason-for-reporting data Df.

It should be noted that, in the flow chart described above, the example is used where, immediately after the communication game ends, a report is allowed to be made such that the participants in the communication game are users to be reported. Alternatively, a report may be allowed to be made at different timing, or a report may be made regarding another user to be reported. For example, the time when a report is allowed to be made may be set such that a report can be made at any time after the communication game ends. Further, a user to be reported may not need to be a participant in the communication game that the user has played themselves. For example, the report information may be configured to be transmitted such that a particular user regarding a game (for example, a user included in the ranking of scores in the game, or a user included in a report ranking) is a user to be reported.

Referring to FIG. 14, the control section 202 of the matchmaking server 200 determines whether or not the control section 202 has received a matchmaking request from any one of the game apparatuses 3 (step 91). Then, if the control section 202 has received a matchmaking request, the control section 202 proceeds to the subsequent step 92. If, on the other hand, the control section 202 has not received a matchmaking request, the control section 202 proceeds to the subsequent step 93.

In step 92, the control section 202 performs the process of sending waiting lists to the game apparatus 3 of the transmission source having transmitted the matchmaking request, and proceeds to the subsequent step 93. With reference to FIG. 15, a description is given below of a waiting list transmission process performed in the above step 92.

Referring to FIG. 15, the control section 202 acquires the device ID of the matchmaking request source having made the matchmaking request (step 101), and proceeds to the subsequent step. For example, the control section 202 inquires of the authentication server 600 about the authentication of the account corresponding to the user ID transmitted from the game apparatus 3 having transmitted the matchmaking request, and also requests the device ID corresponding to the user ID. Then, the control section 202 confirms with the authentication server 600 the authentication of the account corresponding to the user ID. If login rights have been confirmed, the control section 202 acquires the device ID corresponding to the user ID.

It should be noted that the process of authenticating the account has already been performed before access is made to the matchmaking server 200 (for example, steps 41 and 42), and therefore, this process does not need to be performed every time the access is made. In this case, the matchmaking server 200 does not need to communicate directly with the authentication server 600, and may acquire the device ID of the game apparatus 3 having accessed the matchmaking server 200, directly from the game apparatus 3. It should be noted that the following descriptions are given using an example where, every time access is made to the matchmaking server 200, the matchmaking server 200 inquires of the authentication server 600 about the authentication of the account, and also requests the device ID corresponding to the user ID.

Next, the control section 202 extracts a report score NS corresponding to the device ID acquired in the above step 101 (step 102), and proceeds to the subsequent step. For example, with reference to the report score information data Do, the control section 202 extracts the report score NS corresponding to the device ID acquired in the above step 101.

Next, the control section 202 determines whether or not the report score NS extracted in the above step 102 is less than the first threshold T1 (step 103). Then, if the report score NS is less than the first threshold T1, the control section 202 proceeds to the subsequent step 104. If, on the other hand, the report score NS is equal to or greater than the first threshold T1, the control section 202 proceeds to the subsequent step 105.

In step 104, the control section 202 transmits waiting lists of regular waiting rooms, and ends the processing of this subroutine. For example, with reference to the regular room information data Dp, the control section 202 creates waiting lists showing the number, the types, and the like of regular waiting rooms for the game for which the matchmaking request has been made, together with the users registered in the regular waiting rooms, and transmits the created waiting lists to the game apparatus 3 of the matchmaking request source having made the matchmaking request.

In step 105, on the other hand, the control section 202 transmits waiting lists of isolated waiting rooms, and ends the processing of the subroutine. For example, with reference to the isolated room information data Dq, the control section 202 creates waiting lists showing the number, the types, and the like of isolated waiting rooms for the game for which the matchmaking request has been made, together with the users registered in the isolated waiting rooms, and transmits the created waiting lists to the game apparatus 3 of the matchmaking request source having made the matchmaking request.

Referring back to FIG. 14, in step 93, the control section 202 determines whether or not the control section 202 has received a waiting room creation request from the game apparatus 3. Then, if the control section 202 has received a waiting room creation request, the control section 202 proceeds to the subsequent step 94. If, on the other hand, the control section 202 has not received a waiting room creation request, the control section 202 proceeds to the subsequent step 95.

In step 94, the control section 202 performs a waiting room creation process, and proceeds to the subsequent step 95. With reference to FIG. 16, a description is given below of the waiting room creation process performed in the above step 94.

Referring to FIG. 16, the control section 202 acquires the device ID of the waiting room creation request source having made the waiting room creation request (step 111), and proceeds to the subsequent step. For example, the control section 202 inquires of the authentication server 600 about the authentication of the account corresponding to the user ID transmitted from the game apparatus 3 having transmitted the waiting room creation request, and also requests the device ID corresponding to the user ID. Then, the control section 202 confirms with the authentication server 600 the authentication of the account corresponding to the user ID. If login rights have been confirmed, the control section 202 acquires the device ID corresponding to the user ID.

Next, the control section 202 extracts a report score NS corresponding to the device ID acquired in the above step 111 (step 112), and proceeds to the subsequent step. For example, with reference to the report score information data Do, the control section 202 extracts the report score NS corresponding to the device ID acquired in the above step 111.

Next, the control section 202 determines whether or not the report score NS extracted in the above step 112 is less than the first threshold T1 (step 113). Then, if the report score NS is less than the first threshold T1, the control section 202 proceeds to the subsequent step 114. If, on the other hand, the report score NS is equal to or greater than the first threshold T1, the control section 202 proceeds to the subsequent step 115.

In step 114, the control section 202 prepares, for the waiting room creation request source having made the waiting room creation request, a regular waiting room as a waiting room for the game requested by the request source, registers the user having made the request in the waiting room, and proceeds to the subsequent step 116. For example, the control section 202 newly prepares a regular waiting room for the game for which the waiting room creation request has been made, registers the user ID of the request source in the waiting room, and updates the regular room information data Dp. Consequently, for the game for which the waiting room creation request has been made, a new regular waiting room for which the request source is waiting is registered in the regular room information data Dp, together with the user ID of the request source.

In step 115, on the other hand, the control section 202 prepares, for the waiting room creation request source having made the waiting room creation request, an isolated waiting room as a waiting room for the game requested by the request source, registers the user having made the request in the waiting room, and proceeds to the subsequent step 116. For example, the control section 202 newly prepares an isolated waiting room for the game for which the waiting room creation request has been made, registers the user ID of the request source in the waiting room, and updates the isolated room information data Dq. Consequently, for the game for which the waiting room creation request has been made, a new isolated waiting room for which the request source is waiting is registered in the isolated room information data Dq, together with the user ID of the request source.

In step 116, the control section 202 determines whether or not a log of the communication game to be performed using the waiting room created in the above step 114 or 115 is to be acquired. Then, if a log of the communication game is to be acquired, the control section 202 proceeds to the subsequent step 117. If a log of the communication game is not to be acquired, the control section 202 ends the processing of this subroutine. As a first example, if the report score NS of the user having made the waiting room creation request is equal to or greater than a second threshold T2, the control section 202 determines that a log of the communication game to be performed using the waiting room for which the user is waiting is to be acquired. As a second example, the control section 202 determines by random selection whether or not a log of the communication game to be performed using the waiting room for which the user having made the waiting room creation request is to be acquired. As a third example, the control section 202 determines, by combining the first example and the second example together, whether or not a log of the communication game is to be acquired. As an example, if the report score NS of the user having made the waiting room creation request is less than the second threshold T2, the control section 202 determines that a log of the communication game to be performed using the waiting room for which the user is waiting is not to be acquired. Then, if the report score NS is equal to or greater than the second threshold T2, the control section 202 determines by random selection whether or not a log of the communication game to be performed using the waiting room is to be acquired. As another example, if the report score NS of the user having made the waiting room creation request is less than the second threshold T2, the control section 202 determines by random selection whether or not a log of the communication game to be performed using the waiting room for which the user is waiting is to be acquired. Then, if the report score NS is equal to or greater than the second threshold T2, the control section 202 always determines that a log of the communication game to be performed using the waiting room is to be acquired.

In step 117, the control section 202 transmits a log acquisition notification to the game apparatus 3 having made the waiting room creation request, and ends the processing of the subroutine. For example, the control section 202 sets the waiting room for which the user having made the waiting room creation request is waiting, such that a log of the waiting room is to be acquired, and updates the regular room information data Dp or the isolated room information data Dq that manages the waiting room. Then, the control section 202 transmits, to the game apparatus 3 having made the waiting room creation request, a log acquisition notification indicating that a log of the communication game using the created waiting room is to be acquired.

Referring back to FIG. 14, in step 95, the control section 202 determines whether or not the control section 202 has received a waiting room participation request from the game apparatus 3. Then, if the control section 202 has received a waiting room participation request, the control section 202 proceeds to the subsequent step 96. If, on the other hand, the control section 202 has not received a waiting room participation request, the control section 202 proceeds to the subsequent step 97.

In step 96, the control section 202 performs a waiting room participation process, and proceeds to the subsequent step 97. With reference to FIG. 17, a description is given below of the waiting room participation process performed in the above step 96.

Referring to FIG. 17, the control section 202 acquires the device ID of the waiting room participation request source having made the waiting room participation request (step 121), and proceeds to the subsequent step. For example, the control section 202 inquires of the authentication server 600 about the authentication of the account corresponding to the user ID transmitted from the game apparatus 3 having transmitted the waiting room participation request, and also requests the device ID corresponding to the user ID. Then, the control section 202 confirms with the authentication server 600 the authentication of the account corresponding to the user ID. If login rights have been confirmed, the control section 202 acquires the device ID corresponding to the user ID.

Next, the control section 202 registers the user having made the waiting room participation request in the waiting room for which the participation request has been made (step 122), and proceeds to the subsequent step. For example, the control section 202 registers the user ID of the user having made the waiting room participation request in the waiting room for which the participation request has been made, and updates the regular room information data Dp or the isolated room information data Dq that manages the waiting room. Consequently, for the game for which the waiting room participation request has been made, the user ID of the participation request source is registered in the waiting room for which the participation request has been made, in the regular room information data Dp or the isolated room information data Dq.

Next, the control section 202 transmits participant information (step 123), and proceeds to the subsequent step. For example, if a new user has been registered in the waiting room in the above step 122, the control section 202 transmits, to the game apparatuses 3 of all the users participating in the waiting room, participant information indicating all the users (for example, the user IDs of all the participants). It should be noted that the matchmaking server 200 may transmit, to the game apparatuses 3 of the users already registered in the waiting room, participant information indicating only the newly registered user. Further, the matchmaking server 200 may transmit, to the game apparatus 3 of the user newly registered in the waiting room, participant information indicating only the users already registered in the waiting room.

Next, the control section 202 determines whether or not a log of the waiting room for which the participation request has been made is to be acquired (step 124). For example, with reference to the regular room information data Dp or the isolated room information data Dq that manages the waiting room for which the participation request has been made, the control section 202 determines whether or not the waiting room is set such that a log of the waiting room is to be acquired. Then, if a log of the waiting room for which the participation request has been made is to be acquired, the control section 202 proceeds to the subsequent step 125. If, on the other hand, a log of the waiting room for which the participation request has been made is not to be acquired, the control section 202 proceeds to the subsequent step 126.

In step 125, the control section 202 transmits a log acquisition notification to the game apparatus 3 having made the waiting room participation request, and ends the processing of this subroutine. For example, the control section 202 transmits, to the game apparatus 3 having made the waiting room participation request, a log acquisition notification indicating that a log of the communication game using the waiting room for which the participation request has been made is to be acquired.

In step 126, on the other hand, the control section 202 extracts a report score NS corresponding to the device ID acquired in the above step 121, and proceeds to the subsequent step. For example, with reference to the report score information data Do, the control section 202 extracts the report score NS corresponding to the device ID acquired in the above step 121.

Next, the control section 202 determines whether or not a log of the communication game to be performed using the waiting room for which the participation request has been made is to be acquired (step 127). Then, if a log of the communication game is to be acquired, the control section 202 proceeds to the subsequent step 128. If, on the other hand, a log of the communication game is not to be acquired, the control section 202 ends the processing of the subroutine. It should be noted that an example of the determination of whether or not a log of the communication game is to be acquired in the above step 127 is similar to the process of the above step 116, except that the report score NS of the user having made the waiting room creation request is replaced by the report score NS of the user having made the waiting room creation request extracted in the above step 126. Thus, the determination is not described in detail here.

In step 128, the control section 202 transmits a log acquisition notification to the game apparatuses 3 of all the users registered in the waiting room for which the participation request has been made, and ends the processing of the subroutine. For example, the control section 202 sets the waiting room in which the user having made the waiting room participation request has been registered, such that a log of the waiting room is to be acquired, and updates the regular room information data Dp or the isolated room information data Dq that manages the waiting room. Then, the control section 202 transmits, to the game apparatuses 3 of all the users registered in the waiting room, a log acquisition notification indicating that a log of the communication game using the waiting room in which they are participating is to be acquired.

Referring back to FIG. 14, in step 97, the control section 202 determines whether or not the control section 202 has received a report from another apparatus (another one of the game apparatuses 3, the log processing server 400, the log processing apparatus 500, or the like). Then, if the control section 202 has received a report, the control section 202 proceeds to the subsequent step 98. If, on the other hand, the control section 202 has not received a report, the control section 202 proceeds to the subsequent step 99.

In step 98, the control section 202 performs a report score calculation process, and proceeds to the subsequent step 99. With reference to FIG.18, a description is given below of the report score calculation process performed in the above step 99.

Referring to FIG.18, the control section 202 determines whether or not the received report is a report from the user (a report from the game apparatus 3) (step 131). Then, if the received report is a report from the user, the control section 202 proceeds to the subsequent step 132. If, on the other hand, the received report is not a report from the user, the control section 202 proceeds to the subsequent step 137.

In step 132, the control section 202 acquires the device IDs of the reporter having made the report and the reported reportee, and proceeds to the subsequent step. For example, the control section 202 inquires of the authentication server 600 about the authentication of the account corresponding to the user ID (that is, the user ID of the reporter) transmitted from the game apparatus 3 having made the report, and also requests the device ID corresponding to the user ID. Further, the control section 202 requests from the authentication server 600 the device ID corresponding to the user ID representing the reported user (that is, the user ID of the reportee). Then, the control section 202 confirms with the authentication server 600 the authentication of the account corresponding to the user ID of the reporter. If login rights have been confirmed, the control section 202 acquires the device IDs corresponding to the user ID of the reporter and the user ID of the reportee.

Next, the control section 202 registers the reported report information in the reported log information data Dn (step 133), and proceeds to the subsequent step. For example, as shown in FIG. 9, the control section 202 adds the report information reported by the game apparatus 3 (the user ID and the device ID of the reporter, the user ID and the device ID of the reportee, and the reason for reporting), to the reported log information, and updates the reported log information data Dn.

Next, the control section 202 determines whether or not the reported report information has already been reported (step 134). Then, if the reported report information has not already been reported, the control section 202 proceeds to the subsequent step 135. If, on the other hand, the reported report information has already been reported, the control section 202 proceeds to the subsequent step 137. As a first example, with reference to the reported log information data Dn, if the reporter of the received report information has already reported the reportee of the report information, the control section 202 determines that the received report information has already been reported. As a second example, with reference to the reported log information data Dn, if the reporter of the received report information has already reported the reportee of the report information a predetermined number of times or more, the control section 202 determines that the received report information has already been reported. As a third example, with reference to the reported log information data Dn, if the reporter of the received report information has reported the reportee of the report information within a predetermined period, the control section 202 determines that the received report information has already been reported. It should be noted that, if it has been determined that the received report information has already been reported, this reported report information may not need to be registered in the reported log information data Dn.

In step 135, the control section 202 acquires a report score based on the reason for reporting corresponding to the received report, and proceeds to the subsequent step. For example, with reference to the report score table data Dm (see FIG. 8), the control section 202 acquires a report score based on the reason for reporting corresponding to the received report.

Next, the control section 202 calculates the report score of the reportee (step 136), and proceeds to the subsequent step 137. For example, with reference to the report score information data Do (see FIG. 10), the control section 202 adds the report score acquired in the above step 135 to the report score corresponding to the device ID of the reportee of the received report. Then, the control section 202 updates the report score corresponding to the device ID of the report score information data Do, using the report score after the addition.

It should be noted that, in the processes of the above steps 134 through 136, the matchmaking server 200 determines whether a report made on the basis of the same combination of the reporter and the reportee is valid or invalid, and updates the report score of a valid report. However, the game apparatus 3, which makes a report, may limit the making of a report. For example, the game apparatus 3 does not create a report on the basis of the same combination of the reporter and the reportee, such as a report that is invalid as a result of the determination made by the determination criteria in the process of step 134. In this case, the matchmaking server 200 does not need to determine whether the report is valid or invalid, which eliminates the need of the determination process in the above step 134.

In step 137, the control section 202 determines whether or not the received report is a report based on a log processing result (a report from the log processing server 400 or the log processing apparatus 500). Then, if the report is a report based on a log processing result, the control section 202 proceeds to the subsequent step 138. If, on the other hand, the report is not a report based on a log processing result, the control section 202 ends the processing of this subroutine.

In step 138, the control section 202 acquires the device ID of the reported reportee on the basis of the log processing result, and proceeds to the subsequent step. For example, the control section 202 requests from the authentication server 600 the device ID corresponding to the user ID representing the reportee reported by the log processing server 400 or the log processing apparatus 500 (that is, the user ID of the reportee). Then, the control section 202 acquires from the authentication server 600 the device ID corresponding to the user ID of the reportee.

Next, the control section 202 acquires a report score based on the reason for reporting corresponding to the received report (step 139), and proceeds to the subsequent step. As an example, with reference to the report score table data Dm, the control section 202 acquires a report score based on the reason for reporting corresponding to the received report. As another example, the control section 202 sets in advance a value sufficiently greater a the report score corresponding to a report from a user, as a report score exclusively for a report based on a log processing result, and acquires the set report score.

Next, the control section 202 calculates the report score of the reportee (step 140), and ends the processing of the subroutine. For example, with reference to the report score information data Do, the control section 202 adds the report score acquired in the above step 139 to the report score corresponding to the device ID of the reportee of the received report. Then, the control section 202 updates the report score corresponding to the device ID of the report score information data Do, using the report score after the addition.

It should be noted that the descriptions of the processes of the above steps 137 through 140 are given using the example where the report score of the reportee is counted up in accordance with the report from the log processing server 400 or the log processing apparatus 500. Alternatively, the report score of the reportee may be subjected to subtraction or initialized in accordance with the report. In this case, if it has been determined in the log analysis using the log processing server 400 or the log processing apparatus 500 that the user has not committed any dishonest act, data representing the analysis result is transmitted to the matchmaking server 200 as the log processing result. Then, having received the log processing result, the matchmaking server 200, with reference to the report score information data Do, subtracts a predetermined number from the report score corresponding to the device ID of the reportee of the received report, or initializes the report score to a predetermined value (for example, o), and updates the report score corresponding to the device ID of the report score information data Do, using the report score after the subtraction or the initialization. The report score of a user may thus be subjected to subtraction or initialized on the basis of a log analysis result.

Referring back to FIG. 14, in step 99, the control section 202 determines whether or not there is a report score of a device ID of which the last update date of the counting up is a predetermined number of days ago. For example, with reference to the last update date of the counting up of the report score represented by the report score information data Do, the control section 202 confirms the presence or absence of a report score of a device ID of which the last update date is a predetermined number of days ago (for example, seven days ago). Then, if there is a report score of a device ID of which the last update date is a predetermined number of days ago, the control section 202 proceeds to the subsequent step 100. If, on the other hand, there is not a report score of a device ID of which the last update date is a predetermined number of days ago, the control section 202 ends the processing indicated in the flow chart.

In step 100, the control section 202 initializes the report score of which the last update date is a predetermined number of days ago, and ends the processing indicated in the flow chart. For example, the control section 202 initializes to a predetermined value (for example, o) all the report scores which are represented by the report score information data Do and of which the last update dates of the counting up are a predetermined number of days ago, thereby setting all the last update dates to an initialized date, and updates the report score information data Do.

As described above, in the communication system 1, the combination of users to play the communication game is determined on the basis of a report from a user. This makes it possible to prevent a good user from being combined with a user likely to commit a dishonest act, while reducing the processing load of a server and the workload of a server operator. Further, in the communication system 1, when matchmaking is performed for the communication game, it is determined whether or not a log of the communication game is to be acquired, and the log is acquired on the basis of the determination result. This makes it possible to efficiently collect logs of the communication game on the basis of the state of the matchmaking for the communication game.

It should be noted that the above descriptions are given using the example where, in the matchmaking process, users are stratified into two groups on the basis of whether or not their report scores are equal to or greater than the first threshold T1, and then users belonging to the same group are combined together. Alternatively, users may be stratified into three or more groups. For example, a fourth threshold T4 smaller than the first threshold T1 may be newly set, and users may be stratified into: a first group in which the report score NS is less than the fourth threshold T4; a second group in which the report score NS is equal to or greater than the fourth threshold T4 and less than the first threshold T1; and a third group in which the report score NS is equal to or greater than the first threshold T1. Then, users belonging to the same group may be combined together.

In addition, in the matchmaking process, if users are stratified into three or more groups, users belonging to different groups may also be combined together in the matchmaking process. For example, if users are stratified into the first group, the second group, and the third group described above, users of the first group may be combined with other users of the same first group or users of the second group, and users of the third group may be combined with other users of the same third group or users of the second group. That is, in the matchmaking process, users belonging to a given group are combined with users belonging to another group except for at least yet another group into which the report score that is the most different from the report score classified into the given group is classified (typically, users of groups of which the classified report scores are close to each other (for example, adjacent groups)). Even such a combination does not lead to the combination of users whose levels of the report scores are relatively significantly different from each other (for example, users of the first group and users of the third group in the case where users are stratified into the first group, the second group, and the third group). This makes it possible to prevent a good user from being combined with a user likely to commit dishonesty.

In addition, in the processing described above, if the report score of a user has not been counted up from a predetermined number of days ago to the present time, the report score is initialized. The report score is thus initialized on the basis of actual time, whereby, even if the game apparatus 3 is sold or handed over, the elapse of a predetermined number of days since the user has given another user the game apparatus 3 results in initializing the report score set in the game apparatus 3. This makes it possible to prevent the setting of the report score of the previous user from being taken over to the next user. If such effects are not desired, the report score of the user may be initialized by another form. As an example, if the report score of a user has not been counted up while a communication game (application) corresponding to the report score has been executed a predetermined number of times, the report score may be initialized. As another example, if the report score of a user has not been counted up until the time accumulated during which a communication game (application) corresponding to the report score has been executed has reached a predetermined time, the report score may be initialized. As described above, the report score of a user may be initialized on the basis not only of actual time but also of the number of times a communication game (application) has been performed or the time during which a communication game (application) has been performed.

In addition, in the processing described above, when the user of the game apparatus 3 makes a report, information indicating a reason for reporting is transmitted to the matchmaking server 200, and the matchmaking server 200 sets a report score corresponding to the reason for reporting. Alternatively, the transmission source may set the report score. That is, when the user of the game apparatus 3 makes a report, the game apparatus 3 may set a report score corresponding to the reason for reporting, and information indicating the set report score may be transmitted to the matchmaking server 200.

In addition, in the processing described above, when a communication game has ended, each of the game apparatuses 3 having participated in the communication game sends a game log to the log storage server 300. Alternatively, each of the game apparatuses 3 may send a game log at different timing. For example, if the log acquisition target flag represented by the log acquisition target flag data Dh is set to on, each of the game apparatuses 3 may send a game log regarding the game processing to the log storage server 300 in a predetermined cycle in the game processing in the above step 47.

In addition, the above descriptions are given using the example where matchmaking is performed on the game apparatuses 3 on the assumption that one user operates one game apparatus 3, whereby matchmaking is performed on the users. The present invention, however, can also be applied to an environment where a plurality of users operate one game apparatus 3. For example, if, in an environment where a plurality of users operate one game apparatus 3, matchmaking is performed on the users, matchmaking may be performed using only the user IDs subjected to the authentication of the accounts, instead of the device ID. Thus, it is needless to say that matchmaking can be performed on the users even in this environment.

In addition, in the above descriptions, it is set such that a log of each waiting room is to be acquired, and therefore, it is determined whether or not logs of all the users belonging to the waiting room are to be acquired. It may be set, however, such that logs of some of the users (one or two or more users) belonging to the waiting room are to be acquired. In this case, in a communication game using the waiting room, logs of some of the users having participated in the communication game are acquired. The logs, however, acquired from these users include logs of all the users having participated in the communication game, which allows a similar log analysis.

In addition, the above descriptions are given using the example where the game apparatus 3 and the matchmaking server 200 perform the information processing. Alternatively, another apparatus may perform at least some of the processing steps in the information processing. For example, if the game apparatus 3 is further configured to communicate with another apparatus (for example, another server, another game apparatus, or another mobile terminal), the other apparatus may cooperate to perform the processing steps of the information processing. As an example, the other apparatus may generate a virtual world in the game processing and perform the game processing using the virtual world, and the result of the game processing may be displayed on the game apparatus 3 of the display section 39. Alternatively, the game apparatus 3 or another apparatus may perform some of the processing performed by the matchmaking server 200. Another apparatus may thus perform at least some of the processing steps in the information processing, which enables information processing similar to that described above. Further, the information processing described above can be performed by a processor or the cooperation of a plurality of processors, the processor and the plurality of processors contained in a communication system including at least one information processing apparatus and a server. Further, in the above embodiment, the processing indicated in the flow chart described above is performed as a result of the CPU 311 of the game apparatus 3 and the control section 202 of the matchmaking server 200 executing a predetermined program. Alternatively, some or all of the processing indicated in the flow chart may be performed by a dedicated circuit included in the game apparatus 3 and a dedicated circuit included in the matchmaking server 200.

Here, the above variations make it possible to achieve the present invention also by a system form such as cloud computing, or a system form such as a distributed wide area network or a local area network. For example, in a system form such as a distributed local area network, it is possible to execute the information processing between a stationary information processing apparatus (a stationary game apparatus) and a handheld information processing apparatus (a handheld game apparatus) by the cooperation of the apparatuses. It should be noted that, in these system forms, there is no particular limitation on which apparatus performs the process of each step of the information processing described above. Thus, it is needless to say that it is possible to achieve the present invention by sharing the processing in any manner.

Further, the processing orders, the setting values, the conditions used in the determinations, and the like that are used in the information processing described above are merely illustrative. Thus, it is needless to say that the present invention can be achieved also with other orders, other values, and other conditions.

In addition, the communication program (game program) may be supplied to the game apparatus 3 not only through an external storage medium such as the external memory 45, but also through a wired or wireless communication link. Further, the program may be stored in advance in a non-volatile storage device included in the game apparatus 3. It should be noted that examples of an information storage medium having stored therein the program may include CD-ROMs, DVDs, optical disk storage media similar to these, flexible disks, hard disks, magneto-optical disks, and magnetic tapes, as well as non-volatile memories. Alternatively, an information storage medium having stored therein the program may be a volatile memory for storing the program. It can be said that such a storage medium is a storage medium readable by a computer or the like. For example, it is possible to provide the various functions described above by causing a computer or the like to load a program from the storage medium and execute it.

While the present invention has been described in detail above, the above descriptions are merely illustrative in all respects, and do not limit the scope of the present invention. It is needless to say that the present invention can be improved and modified in various manners without departing the scope thereof. It is understood that the scope of the present invention should be interpreted only by the scope of the claims. Further, it is understood that the specific descriptions of the embodiments of the present invention enable a person skilled in the art to carry out an equivalent scope on the basis of the descriptions of the present invention and general technical knowledge. It should be understood that, when used in the specification, the components and the like described in the singular with the word "a" or "an" preceding them do not exclude the plurals of the components. Furthermore, it should be understood that, unless otherwise stated, the terms used in the specification are used in their common meanings in the field. Thus, unless otherwise defined, all the jargons and the technical terms used in the specification have the same meanings as those generally understood by a person skilled in the art in the field of the present invention. If there is a conflict, the specification (including definitions) takes precedence.

A communication system, a communication program, an information processing apparatus, a server, and a communication method according to the present invention can provide a novel communication system, a novel communication program, a novel information processing apparatus, a novel server, and a novel communication method, and are useful as a communication system, a communication program, an information processing apparatus, a server, a communication method, and the like in which a plurality of apparatuses perform predetermined information processing or the like.

## Claims

1. A communication system (1) including a server (200) and a plurality of information processing apparatuses (3) capable of communicating with the server,
each information processing apparatus comprising reporting means (311, S52) for reporting, to the server, an evaluation regarding an execution of a predetermined application performed by each of the other information processing apparatuses,
the server comprising matchmaking means (202, S91-S96) for, when the plurality of information processing apparatuses execute the application together, setting a combination of the information processing apparatuses on the basis of at least the evaluation,
each information processing apparatus comprising processing execution means (311, S47) for executing the application together with any of the other information processing apparatuses with which the information processing apparatus has been combined by the matchmaking means.

2. The communication system according to claim 1, wherein
the reporting means reports the evaluation of any of the other information processing apparatuses with which the information processing apparatus has been combined when executing the application.

3. The communication system according to claim 2, wherein
after the application is executed, the reporting means reports the evaluation regarding the execution of the application performed by any of the other information processing apparatuses with which the information processing apparatus has been combined when executing the application.

4. The communication system according to any one of claims 1 to 3, wherein
the matchmaking means combines together any of the information processing apparatuses having satisfied a predetermined condition for the evaluation.

5. The communication system according to any one of claims 1 to 3, wherein
the matchmaking means includes classification means for, on the basis of a report score calculated using at least the evaluation made by the information processing apparatus, classifying the plurality of information processing apparatuses into at least two groups in accordance with a magnitude of the report score, and
the matchmaking means combines together any of the information processing apparatuses belonging to the same group.

6. The communication system according to any one of claims 1 to 3, wherein
the matchmaking means includes classification means for, on the basis of a report score calculated using at least the evaluation made by the information processing apparatus, classifying the plurality of information processing apparatuses into at least three groups in accordance with a magnitude of the report score, and
the matchmaking means combines together any of the information processing apparatuses belonging to the same group, or combines any of the information processing apparatuses belonging to a first group of the three groups, with any of the information processing apparatuses belonging to another one of the three groups except for at least yet another one of the three groups to which any of the information processing apparatuses whose calculated report scores are the most different from the magnitude of the report score classified into the first group belong.

7. The communication system according to any one of claims 1 to 5, wherein
the server further comprises report score calculation means (202, S98) for, with respect to each evaluation made by the information processing apparatus, accumulating a report score of corresponding one of the information processing apparatuses of which the evaluation has been made, and
the matchmaking means combines together any of the information processing apparatuses of which the accumulated report scores are equal to or greater than a predetermined value (T1), or combines together any of the information processing apparatuses of which the accumulated report scores are less than the predetermined value.

8. The communication system according to claim 7, wherein
the report score calculation means includes evaluation content setting means (Dm) for setting at least evaluation contents for accumulating the report score using a positive value,
when reporting the evaluation to the server, the reporting means sends to the server also information indicating one selected from among the evaluation contents in the report, and
the report score calculation means accumulates the report score of the information processing apparatus of which the evaluation has been made, using the positive value corresponding to the evaluation content sent in the report.

9. The communication system according to claim 8, wherein
the evaluation content setting means further sets evaluation contents for accumulating the report score using a negative value or a value of zero, and
the report score calculation means accumulates the report score of the information processing apparatus of which the evaluation has been made, using the positive value, the negative value, or the value of zero corresponding to each of the evaluation contents sent in the report.

10. The communication system according to claim 9, wherein
the information processing apparatus further comprises reason-for-reporting selection means (311, S82) for, when reporting the evaluation to the server, presenting to a user of the information processing apparatus any of the evaluation contents set to the negative value or the value of zero by the evaluation content setting means, in addition to any of the evaluation contents set to the positive value by the evaluation content setting means, so as to prompt the user to select one of the evaluation contents in the report, and
when reporting the evaluation to the server, the reporting means sends information indicating the evaluation content selected in the report to the server.

11. The communication system according to any one of claims 7 to 10, wherein
the report score calculation means includes initialization means (202, S100) for, if the report score has not been subjected to addition for a predetermined period, initializing the report score to an initial value.

12. The communication system according to any one of claims 7 to 10, wherein
the report score calculation means includes initialization means for, if, while the application has been executed a predetermined number of times, the report score of any of the information processing apparatuses having executed the application has not been subjected to addition, initializing the report score to an initial value.

13. The communication system according to any one of claims 7 to 10, wherein
the report score calculation means includes initialization means for, if, while the application has been executed for a predetermined accumulated time, the report score of any of the information processing apparatuses having executed the application has not been subjected to addition, initializing the report score to an initial value.

14. The communication system according to any one of claims 7 to 13, wherein
the matchmaking means includes waiting room setting means (Dp, Dq) for setting at least one waiting room for waiting for the combination to be set, and provide the waiting room with a flag that distinguishes whether or not the report score of each of the information processing apparatuses waiting in the waiting room is equal to or greater than the predetermined value, and
when combining any of the information processing apparatuses that is not waiting in any of the at least one waiting room with any of the other information processing apparatuses, the matchmaking means combines any of the information processing apparatuses of which the report score is set to a value equal to or greater than the predetermined value, with any of the other information processing apparatuses waiting in any of the at least one waiting room of which the flag indicates a value equal to or greater than the predetermined value, and combines any of the information processing apparatuses of which the report score is set to a value less than the predetermined value, with any of the other information processing apparatuses waiting in any of the at least one waiting room of which the flag indicates a value less than the predetermined value.

15. The communication system according to any one of claims 1 to 14, further comprising:
log confirmation means (400, 500) for confirming a log of the execution of the application; and
log confirmation result reporting means (202, S137) for confirming, in the log, a presence or absence of dishonesty in the execution of the application, and report the confirmation result to the server, wherein
on the basis of the evaluation and the report from the log confirmation result reporting means, the matchmaking means sets the combination of the information processing apparatuses when executing the application.

16. The communication system according to any one of claims 7 to 14, further comprising:
log confirmation means for confirming a log of the execution of the application; and
log confirmation result reporting means for, if dishonesty in the execution of the application has been confirmed in the log, reporting to the server any of the information processing apparatuses having committed the dishonesty, wherein
in accordance with the report from the log confirmation result reporting means, the report score calculation means accumulates the report score of the information processing apparatus regarding which the report has been made, using a relatively large positive value.

17. The communication system according to any one of claims 7 to 14, further comprising:
log confirmation means for confirming a log of the execution of the application; and
log confirmation result reporting means for, if dishonesty in the execution of the application has not been confirmed in the log, reporting to the server any of the information processing apparatuses not having committed dishonesty, wherein
in accordance with the report from the log confirmation result reporting means, the report score calculation means initializes the report score of the information processing apparatus regarding which the report has been made, to an initial value.

18. The communication system according to any one of claims 1 to 17, wherein
the server further comprises evaluation invalidation means (202, S134) for, if the same combination of any of the information processing apparatuses having made the evaluation and corresponding one of the other information processing apparatuses of which the evaluation has been made has made the evaluation more than a predetermined number of times, determining that the evaluation made the predetermined number of times or less is valid, and the evaluation made more than the predetermined number of times is invalid, wherein
on the basis of the evaluation that is valid as a result of the determination of the evaluation invalidation means, the matchmaking means sets the combination of the information processing apparatuses when executing the application.

19. The communication system according to claim 18, wherein
the evaluation invalidation means determines that the evaluation made more than the predetermined number of times within a predetermined period is invalid.

20. The communication system according to any one of claims 1 to 17, wherein
each information processing apparatus further comprises report limitation means for limiting the number of times the evaluation of the same information processing apparatus is reported, to a predetermined number of times.

21. A communication program to be executed by a computer (202) contained in a communication system including a server and a plurality of information processing apparatuses capable of communicating with the server, the communication program causing the computer to function as:
report acquisition means for acquiring from each information processing apparatus an evaluation regarding an execution of a predetermined application performed by each of the other information processing apparatuses; and
matchmaking means for, on the basis of at least the evaluation, setting a combination of the plurality of information processing apparatuses when executing the application, and causing the combined information processing apparatuses to execute the application together.

22. An information processing apparatus capable of communicating with a server, the information processing apparatus comprising:
reporting means for reporting, to the server, an evaluation regarding an execution of a predetermined application performed by another information processing apparatus; and
processing execution means for executing the application together with another information processing apparatus with which the information processing apparatus has been combined by the server on the basis of at least the evaluation.

23. A server capable of communicating with a plurality of information processing apparatuses, the server comprising:
report acquisition means for acquiring from each information processing apparatus an evaluation regarding an execution of a predetermined application performed by each of the other information processing apparatuses; and
matchmaking means for, on the basis of at least the evaluation, setting a combination of the plurality of information processing apparatuses when executing the application, and causing the combined information processing apparatuses to execute the application together.

24. A communication method to be executed by a processor or a cooperation of a plurality of processors, the processor and the plurality of processors contained in a communication system including a server and a plurality of information processing apparatuses capable of communicating with the server, the communication method comprising:
a reporting step of reporting, to the server, an evaluation regarding an execution of a predetermined application performed by each of the other information processing apparatuses;
a matchmaking step of performing matchmaking by, when the plurality of information processing apparatuses execute the application together, setting a combination of the information processing apparatuses on the basis of at least the evaluation; and
a processing execution step of executing the application together with any of the other information processing apparatuses with which each information processing apparatus has been combined in the matchmaking step.
